# EUROPÄISCHE PATENTSCHRIFT

(11) **EP 1 976 892 B1**
(45) Veröffentlichungstag und Bekanntmachung des Hinweises auf die Patenterteilung: **02.06.2010**
(21) Anmeldenummer: 07712004.6
(22) Anmeldetag: 05.01.2007
(51) Int. Cl.: C08F 8/12, C08F 30/02, C08F 210/02, C09D 5/08

(54) **COPOLYMERE, VERFAHREN ZUR IHRER HERSTELLUNG UND IHRE VERWENDUNG ZUR BEHANDLUNG VON OBERFLÄCHEN**
COPOLYMERS, METHOD FOR PRODUCING THEM AND THEIR USE FOR TREATING SURFACES
COPOLYMERES, PROCEDE DE PRODUCTION DE CES COPOLYMERES ET LEUR UTILISATION POUR TRAITER DES SURFACES

(30) Priorität: 09.01.2006 EP 06100170
(43) Veröffentlichungstag der Anmeldung: 08.10.2008
(73) Patentinhaber: BASF SE, 67056 Ludwigshafen (DE)
(72) Erfinder: PFEIFFER, Thomas, 67459 Böhl-Iggelheim (DE); WITTELER, Helmut, 67157 Wachenheim (DE); DIETSCHE, Frank, 69198 Schriesheim (DE); HEIDENFELDER, Thomas, 67125 Dannstadt-Schauernheim (DE); MÄHLING, Frank-Olaf, 68165 Mannheim (DE); FECHTENKÖTTER, Andreas, Singapore 098647 (SG); EHLE, Michael, 67071 Ludwigshafen (DE); NICOLINI, Fabio, 67112 Mutterstadt (DE)
(86) Internationale Anmeldenummer: PCT/EP2007/050111
(87) Internationale Veröffentlichungsnummer: WO 2007/080152

(56) Entgegenhaltungen:
- EP-A- 0 846 733
- WO-A-2004/074372
- US-A- 3 169 940

## Beschreibung

Copolymere, Verfahren zur ihrer Herstellung und ihre Verwendung zur Behandlung von Oberflächen

Die vorliegende Erfindung betrifft Copolymere, die als Comonomere einpolymerisiert enthalten
(a) Ethylen,
(b) eine oder mehrere Verbindungen der allgemeinen Formel I 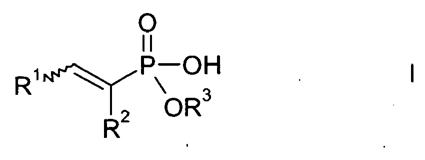
(c) gegebenenfalls einen oder mehrere Alkenylphosphonsäurediester,
(d) gegebenenfalls ein oder mehrere weitere radikalisch copolymerisierbare Comonomere,
   wobei die Variablen wie folgt definiert sind:
   R¹ gewählt aus Wasserstoff und unverzweigtem und verzweigtem C₁-C₁₀-Alkyl,
   R² gewählt aus Wasserstoff und unverzweigtem und verzweigtem C₁-C₁₀-Alkyl
   R³ gewählt aus Wasserstoff, Phenyl, Benzyl und unverzweigtem und verzweigtem C₁-C₁₀-Alkyl und unverzweigtem und verzweigten Hydroxy-C₂-C₁₀-Alkyl,
   als freie Säure oder partiell oder vollständig neutralisiert mit Alkalimetall, Erdalkalimetall, Ammoniak oder organischem Amin.

Die vorliegende Erfindung betrifft außerdem ein Verfahren zur Herstellung von erfindungsgemäßen Copolymeren. Weiterhin betrifft die vorliegende Erfindung die Verwendung der erfindungsgemäßen Copolymeren beispielsweise zur Behandlung von Oberflächen. Weiterhin betrifft die vorliegende Erfindung Oberflächen, die mit erfindungsgemäßem Copolymer beschichtet sind.

Die Oberflächenbehandlung beispielsweise von Metall- oder Polymeroberflächen ist ein Gebiet von großer wirtschaftlicher Bedeutung. Bei der Oberflächenbehandlung kann es beispielsweise um eine Behandlung zum Zwecke der Lackhaftung, des Unterwanderungsschutzes eines Lacks bei korrosiver Belastung, zur Verbesserung des Reibungskoeffizienten mit anderen Oberflächen - insbesondere beim Kaltverformen, etwa durch Tiefziehen, Falzen, Bördeln, Biegen, zur Erreichung eines dekorativen Aussehens, beispielsweise Glanz und Rauhigkeit, zur Verbesserung der Verklebbarkeit, der Schweißbarkeit und insbesondere des Korrosionsschutzes gehen.

Es ist bekannt, Oberflächen korrosionsfest auszurüsten, indem man sie mit Verbindungen wie beispielsweise 1,12-Dodecan-di (phosphonsäuredimethylester) behandelt. Eine derartige Behandlung hat jedoch den Nachteil, ausschließlich als Unterwanderungsschutz für Kombinationen von bestimmten Metallen mit bestimmten Lacken zu wirken und bei separater Anwendung keine Korrosionsschutzschicht aufzubauen.

Es bestand also die Aufgabe, ein Verfahren bereit zu stellen, um Oberflächen beispielsweise von Metall oder Polymer zu behandeln und damit insgesamt verbesserte Eigenschaften und insbesondere einen verbesserten Korrosionsschutz zu erreichen. Es bestand weiterhin die Aufgabe, beschichtete Oberflächen bereit zu stellen. Es bestand weiterhin die Aufgabe, geeignete Stoffe zu finden, die zur Behandlung von Oberflächen besonders geeignet sind. Insbesondere bestand die Aufgabe, Stoffe zur Verfügung zu stellen, die sowohl in wässriger Lösung als Korrosionsinhibitor als auch nach dem Austrocknen auf eine Metalloberfläche als Korrosionsschutzschicht wirken können.

Demgemäss wurde die eingangs definierten Copolymere gefunden, und demgemäss wurde das eingangs definierte Verfahren gefunden.

Erfindungsgemäße Copolymere enthalten einpolymerisiert:
(a) Ethylen,
(b) mindestens eine Verbindung der allgemeinen Formel I 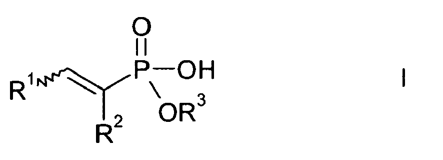 wobei die Variablen wie folgt definiert sind:
   R¹ gewählt aus verzweigtem und vorzugsweise unverzweigtem C₁-C₁₀-Alkyl, wie beispielsweise Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, n-Octyl, 2-Ethylhexyl, n-Nonyl, n-Decyl; besonders bevorzugt C₁-C₄-Alkyl wie Methyl, Ethyl, n-Propyl, n-Butyl, insbesondere Methyl,
      und ganz besonders bevorzugt Wasserstoff,
   R² gewählt aus verzweigtem und vorzugsweise unverzweigtem C₁-C₁₀-Alkyl, wie beispielsweise Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, n-Octyl, 2-Ethylhexyl, n-Nonyl, n-Decyl; besonders bevorzugt unverzweigtes C₁-C₄-Alkyl wie Methyl, Ethyl, n-Propyl, n-Butyl, insbesondere Methyl,
      und ganz besonders bevorzugt Wasserstoff,
   R³ verschieden oder vorzugsweise gleich und gewählt aus Wasserstoff,
      Phenyl, unsubstituiert oder ein- bis dreimal substituiert mit beispielsweise Halogen, z.B. Chlor, oder beispielsweise mit unverzweigtem C₁-C₄-Alkyl wie Methyl, Ethyl, n-Propyl, n-Butyl, insbesondere Methyl,
      Benzyl,
      und verzweigtem und vorzugsweise unverzweigtem C₁-C₁₀-Alkyl, wie beispielsweise Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, n-Octyl, 2-Ethylhexyl, n-Nonyl, n-Decyl; besonders bevorzugt unverzweigtes C₁-C₄-Alkyl wie Methyl, Ethyl, n-Propyl, n-Butyl, insbesondere Methyl,
      und verzweigten und vorzugsweise unverzweigtem Hydroxy-C₂-C₁₀-Alkyl, bevorzugt 2-Hydroxy-C₂-C₆-alkyl oder ω-Hydroxy-C₂-C₆-Alkyl. Beispiele für 2-Hydroxy-C₂-C₆-alkyl sind 2-Hydroxyethyl, 2-Hydroxy-n-propyl, 2-Hydroxy-n-butyl, 2-Hydroxy-n-hexyl, 2-Hydroxy-n-hexyl, 2-Hydroxyisopropyl. Beispiele für ω-Hydroxy-C₂-C₆-Alkyl sind 3-Hydroxypropyl, 4-Hydroxybutyl, 5-Hydroxypentyl, 6-Hydroxyhexyl und insbesondere 2-Hydroxyethyl.
(c) gegebenenfalls einen oder mehrere Alkenylphosphonsäurediester, vorzugsweise handelt es sich bei Alkenylphosphonsäurediester (c) um eine Verbindung der Formel II 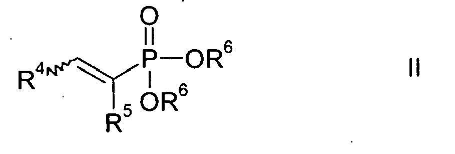 wobei die Variablen wie folgt definiert sind:
   R⁴ gewählt aus verzweigtem und vorzugsweise unverzweigtem C₁-C₁₀-Alkyl, wie beispielsweise Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, n-Octyl, 2-Ethylhexyl, n-Nonyl, n-Decyl; besonders bevorzugt C₁-C₄-Alkyl wie Methyl, Ethyl, n-Propyl, n-Butyl, insbesondere Methyl,
   und ganz besonders bevorzugt Wasserstoff,
   R⁵ gewählt aus verzweigtem und vorzugsweise unverzweigtem C₁-C₁₀-Alkyl, wie beispielsweise Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, n-Octyl, 2-Ethylhexyl, n-Nonyl, n-Decyl; besonders bevorzugt unverzweigtes C₁-C₄-Alkyl wie Methyl, Ethyl, n-Propyl, n-Butyl, insbesondere Methyl,
   und ganz besonders bevorzugt Wasserstoff,
   R⁶ verschieden oder vorzugsweise gleich und gewählt aus Phenyl, unsubstituiert oder ein- bis dreimal substituiert mit beispielsweise Halogen, z.B. Chlor, oder beispielsweise mit unverzweigtem C₁-C₄-Alkyl wie Methyl, Ethyl, n-Propyl, n-Butyl, insbesondere Methyl,
   Benzyl,
   und verzweigtem und vorzugsweise unverzweigtem C₁-C₁₀-Alkyl, wie beispielsweise Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, n-Octyl, 2-Ethylhexyl, n-Nonyl, n-Decyl; besonders bevorzugt unverzweigtes C₁-C₄-Alkyl wie Methyl, Ethyl, n-Propyl, n-Butyl, insbesondere Methyl.
   Dabei können die Reste R⁶ miteinander unter Bildung eines fünf- bis 10-gliedrigen Rings verbunden sein. So kann die Gruppe P(O)(OR⁶)₂ beispielsweise sein: 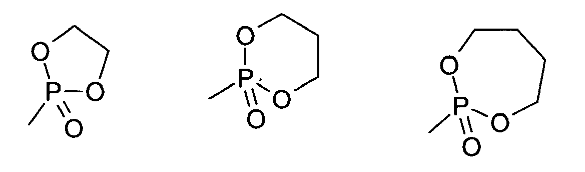
(d) gegebenenfalls ein oder mehrere weitere radikalisch copolymerisierbare Comonomere.

In einer Ausführungsform der vorliegenden Erfindung sind ein oder mehrere weitere radikalisch copolymerisierbare Comonomere (d) gewählt aus ethylenisch ungesättigten Carbonsäuren, beispielsweise Crotonsäure und insbesondere (Meth)acrylsäure, (Meth)acrylsäure-C₁-C₁₀-Alkylester, insbesondere Methyl(meth)acrylat, Ethyl(meth)-acrylat, n-Butyl(meth)acrylat, 2-Ethylhexyl(meth)acrylat, Ameisensäurevinylester, C₁-C₁₀-Alkylcarbonsäurevinylester, beispielsweise Vinylacetat oder Vinylpropionat, ethylenisch ungesättigten C₄-C₁₀-Dicarbonsäuren und deren Anhydriden, C₁-C₂₀-Alkylvinyl- und allylethern und
α-Olefinen mit 3 bis 40 C-Atomen wie beispielsweise Isobuten, 1-Buten, Diisobuten, 1-Hexen und 1-Dodecen.

Bevorzugte Comonomere (d) sind gewählt aus ethylenisch ungesättigten Carbonsäuren, beispielsweise Crotonsäure und insbesondere (Meth)acrylsäure, und ethylenisch ungesättigten C₄-C₁₀-Dicarbonsäuren und deren Anhydriden, insbesondere Itaconsäureanhydrid und ganz besonders Maleinsäureanhydrid.

In einer Ausführungsform der vorliegenden Erfindung enthalten erfindungsgemäße Copolymere kein weiteres Comonomer (d) einpolymerisiert.

Im Rahmen der vorliegenden Erfindung bedeutet "enthalten einpolymerisiert" im Zusammenhang mit Verbindungen der allgemeinen Formel I nicht notwendigerweise, dass man eine Verbindung der allgemeinen Formel I als solche mit Ethylen und gegebenenfalls einem oder mehreren Alkenylphosphonsäurediester (c) und/oder einem oder mehreren Comonomeren (d) umsetzt. Vielmehr enthalten erfindungsgemäße Copolymere formal mindestens eine Verbindung der allgemeinen Formel I einpolymerisiert, bzw. sie enthalten Einheiten, die sich formal von einer oder mehreren Verbindungen der allgemeinen Formel I als Comonomer ableiten.

In einer Ausführungsform der vorliegenden Erfindung sind die beiden Reste R⁶ verschieden, wobei der eine Rest R⁶ beispielsweise Methyl und der andere Ethyl oder n-Propyl oder iso-Propyl bedeutet.

In einer anderen, bevorzugten Ausführungsform der vorliegenden Erfindung sind die beiden Reste R⁶ gleich und insbesondere gewählt aus Methyl und Ethyl.

In einer Ausführungsform der vorliegenden Erfindung bedeuten R¹ und R² jeweils Wasserstoff, R³ ist gewählt aus C₁-C₄-Alkyl, insbesondere gewählt aus Methyl und Ethyl.

In einer Ausführungsform der vorliegenden Erfindung bedeuten R⁴ und R⁵ jeweils Wasserstoff, und die Reste R⁶ sind jeweils gleich und gewählt aus C₁-C₄-Alkyl, insbesondere gewählt aus Methyl und Ethyl.

In einer Ausführungsform der vorliegenden Erfindung sind R³ und R⁶ jeweils gleich.

In einer Ausführungsform der vorliegenden Erfindung sind R¹ und R⁴, R² und R⁵ sowie R³ und R⁶ jeweils paarweise gleich, das heißt R¹ und R⁴ sind jeweils gleich, R² und R⁵ sind jeweils gleich und R³ und R⁶ sind jeweils gleich.

Bevorzugt sind R¹, R², R⁴ sowie R⁵ jeweils gleich und besonders bevorzugt jeweils Wasserstoff.

In einer Ausführungsform der vorliegenden Erfindung enthalten erfindungsgemäße Copolymere zwei verschiedene Verbindungen der Formel I einpolymerisiert, von denen R¹ und R⁴ sowie R² und R⁵ jeweils paarweise gleich sind, und von denen bei einer R³ gleich Wasserstoff ist und bei der anderen R³ gewählt ist aus Phenyl, Benzyl, C₁-C₁₀-Alkyl und C₂-C₁₀-Hydroxyalkyl, insbesondere lineares C₁-C₄-Alkyl und ganz besonders bevorzugt Methyl.

In einer Ausführungsform der vorliegenden Erfindung handelt es sich es sich bei erfindungsgemäßem Copolymer um Copolymer mit einem mittleren Molekulargewicht M_{w} im Bereich von 1.000 bis 500.000 g/mol, bevorzugt 1.000 bis 200.000 g/mol und ganz besonders bevorzugt 1.500 bis 150.000 g/mol.

In einer Ausführungsform der vorliegenden Erfindung weist erfindungsgemäßes Copolymer eine Schmelzemassefließrate (MFR) im Bereich von 1 bis 50 g/10 min, bevorzugt 5 bis 20 g/10 min, besonders bevorzugt 7 bis 15 g/10 min auf,gemessen bei 160°C und einer Belastung von 325 g nach EN ISO 1133.

In einer Ausführungsform der vorliegenden Erfindung weist erfindungsgemäßes Copolymer bei 120°C eine kinematische Schmelzeviskosität v von 60 mm²/s bis 100.000 mm²/s auf, bevorzugt 100 mm²/s bis 50.000 mm²/s.

In einer Ausführungsform der vorliegenden Erfindung liegt der Schmelzbereich von erfindungsgemäßem Copolymer im Bereich von 50 bis 120°C, bevorzugt im Bereich von 60 bis 110°C, bestimmt durch DSC nach DIN 51007.

In einer Ausführungsform der vorliegenden Erfindung kann der Schmelzbereich von erfindungsgemäßem Copolymer breit sein und ein Temperaturintervall von mindestens 7 bis höchstens 20°C, bevorzugt mindestens 10°C und höchstens 15°C betreffen.

In einer anderen Ausführungsform der vorliegenden Erfindung ist der Schmelzpunkt von erfindungsgemäßem Copolymer scharf und liegt in einem Temperaturintervall von weniger als 2°C, bevorzugt weniger als 1°C, bestimmt nach DIN 51007.

Die Dichte von erfindungsgemäßem Copolymer beträgt üblicherweise 0,89 bis 1,10 g/cm³, bevorzugt 0,92 bis 0,99 g/cm³, bestimmt nach DIN 53479.

In einer Ausführungsform der vorliegenden Erfindung liegt die Säurezahl von erfindungsgemäßem Copolymer im Bereich von 10 bis 250 mg KOH/g Copolymer, bevorzugt 20 bis 200 mg KOH/g Copolymer, bestimmt nach DIN 53402.

Erfindungsgemäße Copolymere können alternierende Copolymere sein oder Blockcopolymere oder vorzugsweise statistische Copolymere.

In einer speziellen Ausführungsform der vorliegenden Erfindung handelt es sich bei erfindungsgemäßen Copolymeren um im Wesentlichen statistische Copolymere, die eine oder mehrere alternierende Comonomersequenzen oder eine oder mehrere Comonomersequenzen mit Blockcharakter einpolymerisiert aufweisen können.

Dabei können erfindungsgemäße Copolymere als freie Säure vorliegen oder partiell oder vollständig neutralisiert sein, beispielsweise mit zwei- oder mehrwertigen Kationen wie beispielsweise Erdalkalimetallkationen, Zn²⁺, Zr⁴⁺, ZrO²⁺, Cr³⁺, Mn²⁺, Fe²⁺, Fe³⁺, Co²⁺, Ni²⁺, Cu²⁺, Al³⁺, Ce³⁺, V²⁺, V³⁺, bevorzugt Mg²⁺, Ca²⁺, Zn²⁺ oder Mn²⁺ und Cr³⁺, bevorzugt mit einwertigen Kationen wie Alkalimetall wie z. B. Na⁺ oder K⁺ oder mit Ammoniak oder organischem Amin, insbesondere C₁-C₄-Monoalkylamin, Di-C₁-C₄-alkylamin, Tri-C₁-C₄-alkylamin oder Tetra-C₁-C₄-alkylammonium.

In einer Ausführungsform der vorliegenden Erfindung sind erfindungsgemäße Copolymere vollständig oder bis zu 90 mol-%, bevorzugt bis zu 75 mol-% der Carbonsäuregruppen bzw. P(O)-OH-Gruppen mit Hydroxyalkylammonium insbesondere der Formel (C₁-C₄-Alkyl)x(C₂-C₄-ω-Hydroxyalkyl)_{y}NH_{4-x-y} neutralisiert, wobei
x eine ganze Zahl im Bereich von null bis drei, bevorzugt null oder eins,
y eine ganze Zahl im Bereich von eins bis vier
ist mit der Maßgabe, dass die Summe aus x und y den Wert vier nicht überschreitet.

Bevorzugte Beispiele für C₁-C₄-ω-Hydroxyalkyl sind 3-Hydroxypropyl, 4-Hydroxybutyl und insbesondere 2-Hydroxyethyl, im Folgenden auch als Hydroxyethyl bezeichnet.

Besonders bevorzugte Beispiele für Hydroxyalkylammonium sind N,N-Dihydroxyethylammonium, N-Methyl-N-Hydroxyethylammonium, N,N-Dimethyl-N-hydroxyethylammonium, N-Methyl-N,N-dihydroxyethylammonium, N-n-Butylhydroxyethylammonium, N-n-Butyl-N,N-dihydroxyethylammonium.

Besonders geeignete Amine zum Neutralisieren sind Trialkylamine und Alkanolamine mit weniger als 30, besonders bevorzugt weniger als 10 Kohlenstoffatomen.

Ganz besonders bevorzugte Amine zum Neutralisieren sind
(3-Aminopropyl)-amino-2-ethanol, 1,1-Dimethylpropin-2-ylamin, 1,2-Ethandiamin, 1,2-Propylendiamin, 1,3-Propandiamin, 1,6-Hexandiamin, 1-Amino-2-propanol, 2-(Dimethylamino)-ethanol, 2-Phenylaminoethanol, 6-Amino-1-hexanol, Cyclohexylamin, Diethanolamin, Diisopropanolamin, Dimethylamin, Dimethylaminoethoxyethanol, Ethanolamin, Ethylamin, Kokosfettamin, Triethanolamin, Cyclohexylamin und N,N-Dimethylaminocyclohexan.

Weitere geeignete organische Amine zum Neutralisieren sind beispielsweise Morpholin, Imidazol, Imidazoline, Oxazoline, Triazole und Fettamine.

Geeignete Mittel zum Neutralisieren sind weiterhin KOH, NaOH, Ca(OH)₂, NaHCO₃, Na₂CO₃, K₂CO₃ und KHCO₃.

In einer Ausführungsform der vorliegenden Erfindung kann man zum Neutralisieren stöchiometrische Mengen oder einen Überschuss von Übergangsmetallkomplexen, beispielsweise einem oder mehreren Übergangsmetall-Aminen oder Übergangsmetallammoniumkomplexen, bevorzugt einem oder mehreren Zink-Amin- und/oder Zink-Ammoniak-Komplexen einsetzen, beispielsweise Salze von [Zn(NH₃)₄(H₂O)₂]²⁺ wie beispielsweise Sulfate oder Nitrate. Insbesondere der Einsatz von Zink-Ammoniak-Komplexen hat den Vorteil, dass nach dem Trocknen ein über Zinkionen vernetzer Film entsteht, der sich auch in aggressiven Medien nicht ohne weiteres auflöst und daher erhöhten Korrosionsschutz bietet.

Ein weiterer Gegenstand der vorliegenden Erfindung ist ein Verfahren zur Herstellung von erfindungsgemäßen Copolymeren.

Erfindungsgemäße Copolymere kann man beispielsweise so herstellen, dass man Ethylen (a), eine oder mehrere Verbindungen der allgemeinen Formel I (b) und gegebenenfalls einen oder mehrere Alkenylphosphonsäurediester (c) und gegebenenfalls ein oder mehrere weitere radikalisch copolymerisierbare Comonomere (d) miteinander copolymerisiert.

Erfindungsgemäße Copolymere kann man insbesondere dann, wenn R¹ und R⁴, R² und R⁵ sowie R³ und R⁶ jeweils paarweise gleich sind, durch vorzugsweise radikalisch initiierte Copolymerisation von Ethylen (a), mindestens einem Alkenylphosphonsäurediester (c) und gegebenenfalls einem oder mehreren weiteren radikalisch copolymerisierbaren Comonomeren (d) unter Hochdruckbedingungen herstellen, beispielsweise in gerührten Hochdruckautoklaven oder in Hochdruckrohrreaktoren, gefolgt von einer zumindest partiellen Hydrolyse von einpolymerisiertem Alkenylphosphonsäurediester (c).

Ein weiterer Gegenstand der vorliegenden Erfindung ist ein Verfahren zur Herstellung von erfindungsgemäßen Copolymeren, dadurch gekennzeichnet, dass man
(a) Ethylen,
(c) gegebenenfalls einen oder mehrere Alkenylphosphonsäurediester,
(d) gegebenenfalls ein oder mehrere weitere radikalisch copolymerisierbare Comonomere,
   bei 500 bis 4000 bar und Reaktionstemperaturen im Bereich von 150 bis 300°C miteinander copolymerisiert, vorzugsweise radikalisch initiiert, und anschließend zumindest partiell hydrolysiert.

Die Durchführung der radikalisch initiierten Copolymerisation, im Folgenden auch kurz als Copolymerisation bezeichnet, führt man bevorzugt in gerührten Hochdruckautoklaven durch. Gerührte Hochdruckautoklaven sind an sich bekannt, eine Beschreibung findet man in Ullmann's Encyclopedia of Industrial Chemistry, 5. Auflage, Stichworte: Waxes, Bd. A 28, S. 146 ff., Verlag Chemie Weinheim, Basel, Cambridge, New York, Tokio, 1996. Bei ihnen verhält sich überwiegend das Verhältnis Länge/Durchmesser in Intervallen von 5:1 bis 30:1, bevorzugt 10:1 bis 20:1. Die gleichfalls anwendbaren Hochdruckrohrreaktoren findet man ebenfalls in Ullmann's Encyclopedia of Industrial Chemistry, 5. Auflage, Stichworte: Waxes, Bd. A 28, S. 146 ff., Verlag Chemie Weinheim, Basel, Cambridge, New York, Tokio, 1996.

Geeignete Druckbedingungen für die Copolymerisation sind 500 bis 4000 bar, bevorzugt 1500 bis 2500 bar. Bedingungen dieser Art werden im Folgenden auch als Hochdruck bezeichnet. Die Reaktionstemperaturen liegen im Bereich von 150 bis 300°C, bevorzugt im Bereich von 195 bis 280°C.

Die Copolymerisation kann man in Gegenwart eines Reglers durchführen. Als Regler verwendet man beispielsweise Wasserstoff oder mindestens einen aliphatischen Aldehyd oder mindestens ein aliphatisches Keton der allgemeinen Formel III 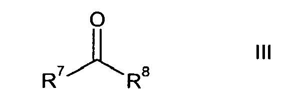 oder Mischungen derselben.

Dabei sind die Reste R⁷ und R⁸ gleich oder verschieden und ausgewählt aus Wasserstoff;
C₁-C₆-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, besonders bevorzugt C₁-C₄-Alkyl wie Methyl, Ethyl, n-Propyl, iso-Propyl, n-Butyl, iso-Butyl, sec.-Butyl und tert.-Butyl; C₃-C₁₂-Cycloalkyl wie Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl.

In einer besonderen Ausführungsform sind die Reste R⁷ und R⁸ miteinander unter Bildung eines 4- bis 13-gliedrigen Rings kovalent verbunden. So können R⁷ und R⁸ beispielsweise gemeinsam sein: -(CH₂)₄-, -(CH₂)₅-, -(CH₂)₆, -(CH₂)₇-, -CH(CH₃)-CH₂-CH₂-CH(CH₃)- oder -CH(CH₃)-CH₂-CH₂-CH₂-CH(CH₃)-.

Besonders bevorzugte Regler sind Propionaldehyd, Aceton und Ethylmethylketon.

Beispiele für geeignete Regler sind weiterhin alkylaromatische Verbindungen, beispielsweise Toluol, Ethylbenzol oder ein oder mehrere Isomere des Xylols. Beispiele für gut geeignete Regler sind weiterhin Paraffine wie beispielsweise Isododekan (2,2,4,6,6-Pentamethylheptan) oder Isooktan.

Als Starter für die radikalische Copolymerisation können die üblichen Radikalstarter wie beispielsweise organische Peroxide, Sauerstoff oder Azoverbindungen eingesetzt werden. Auch Mischungen mehrerer Radikalstarter sind geeignet.

Geeignete Peroxide, ausgewählt aus kommerziell erhältlichen Substanzen, sind
- Didekanoylperoxid, 2,5-Dimethyl-2,5-di(2-ethylhexanoylperoxy)hexan, tert.-Amylperoxypivalat, tert.-Butylperoxypivalat, tert.-Amylperoxy-2-ethylhexanoat, Dibenzoylperoxid, tert.-Butylperoxy-2-ethylhexanoat, tert.-Butylperoxydiethylacetat, tert.-Butylperoxydiethylisobutyrat, 1,4-Di(tert.-butylperoxycarbonyl)-cyclohexan als Isomerengemisch, tert.-Butylperisononanoat 1,1-Di-(tert.-butylperoxy)-3,3,5-trimethylcyclohexan, 1,1-Di-(tert.-butylperoxy)-cyclohexan, Methyl-isobutylketonperoxid, tert.-Butylperoxyisopropylcarbonat, 2,2-Di-tert.-butylperox)butan oder tert.-Butylperoxacetat;
- tert.-Butylperoxybenzoat, Di-tert.-amylperoxid, Dicumylperoxid, die isomeren Di-(tert.-butylperoxyisopropyl)benzole, 2,5-Dimethyl-2,5-di-tert.-butylperoxyhexan, tert.-Butylcumylperoxid, 2,5-Dimethyl-2,5-di(tert.-butylperoxy)-hex-3-in, Di-tert.-butylperoxid, 1,3-Diisopropylbenzolmonohydroperoxid, Cumolhydroperoxid oder tert.-Butylhydroperoxid; oder
- dimere oder trimere Ketonperoxide, wie aus EP-A 0 813 550 bekannt.

Als Peroxide sind Di-tert.-butylperoxid, tert.-Butylperoxypivalat, tert.-Butylperoxyisononanoat oder Dibenzoylperoxid oder Gemische derselben besonders geeignet. Als Azoverbindung sei Azobisisobutyronitril ("AIBN") beispielhaft genannt. Radikalstarter werden in für Polymerisationen üblichen Mengen dosiert.

Zahlreiche kommerziell erhältliche organische Peroxide werden mit sogenannten Phlegmatisierern versetzt, bevor sie verkauft werden, um sie besser handhabbar zu machen. Als Phlegmatisierer sind beispielsweise Weißöl oder Kohlenwasserstoffe wie insbesondere Isododekan geeignet. Unter den Bedingungen der Hochdruckpolymerisation können derartige Phlegmatisierer eine molekulargewichtsregelnde Wirkung haben. Im Sinne der vorliegenden Erfindung soll unter dem Einsatz von Molekulargewichtsreglern der zusätzliche Einsatz weiterer Molekulargewichtsregler über den Einsatz der Phlegmatisierer hinaus verstanden werden.

Das Mengenverhältnis der Comonomeren bei der Dosierung entspricht üblicherweise nicht genau dem Verhältnis der Einheiten in den erfindungsgemäßen Copolymeren, weil Alkenylphosphonsäurediester (c) im Allgemeinen leichter in Copolymere eingebaut werden als Ethylen.

Die Comonomere (a), (c) und gegebenenfalls (d) werden üblicherweise gemeinsam oder getrennt dosiert.

Die Comonomere (a), (c) und gegebenenfalls (d) können mit einer Hochdruckpumpe auf den Polymerisationsdruck gebracht werden. In einer anderen Ausführungsform werden die Comonomeren (a), (c) und gegebenenfalls (d) zunächst mit Hilfe eines Kompressors auf einen erhöhten Druck von beispielsweise 150 bis 400 bar, bevorzugt 200 bis 300 bar und insbesondere 260 bar und danach mit einem weiteren Kompressor auf den eigentlichen Polymerisationsdruck gebracht. In einer anderen Ausführungsform werden die Comonomeren (a) zunächst mit Hilfe eines Kompressors auf einen erhöhten Druck von beispielsweise 150 bis 400 bar, bevorzugt 200 bis 300 bar und insbesondere 260 bar und danach mit einem weiteren Kompressor auf den eigentlichen Polymerisationsdruck gebracht, und die Comonomere (c) und gegebenenfalls (d) werden gleichzeitig mit einer Hochdruckpumpe auf den Polymerisationsdruck gebracht.

Die Copolymerisation kann wahlweise in Abwesenheit und in Anwesenheit von Lösemitteln durchgeführt werden, wobei Mineralöle, Weißöl und andere Lösungsmittel, die während der Polymerisation im Reaktor zugegen sind und zum Phlegmatisieren des oder der Radikalstarter verwendet wurden, im Sinne der vorliegenden Erfindung nicht als Lösemittel gelten. Geeignete Lösemittel sind beispielsweise Toluol, Isododekan, Isomere des Xylols, Aceton und Methylethylketon.

Nach der.Copolymerisation kann man beispielsweise nicht einpolymerisiertes Comonomer (a), (c) und/oder gegebenenfalls (d) entfernen.

Durch die vorstehend beschriebene Copolymerisation erhält man ein Copolymer, das im Rahmen der vorliegenden Erfindung auch als Vorstufen-Copolymer bezeichnet wird.

Nach der Cpolymerisation von (a), (c) und gegebenenfalls (d) führt man eine zumindest partielle Hydrolyse von einpolymerisiertem Alkenylphosphonsäurediester (c) durch.

In einer Ausführungsform der vorliegenden Erfindung führt man die zumindest partielle Hydrolyse so durch, dass man Vorstufen-Copolymer mit einem oder mehreren anorganischen Hydroxiden, vorzugsweise Alkalimetallhydroxiden, insbesondere Natriumhydroxid oder Kaliumhydroxid, in Substanz oder bevorzugt in organischem Lösungsmittel oder in Wasser oder in einer Mischung aus organischem Lösungsmittel und Wasser umsetzt. In einer Ausführungsform der vorliegenden Erfindung führt man die zumindest partielle Hydrolyse so durch, dass man Vorstufen-Copolymer mit Ammoniak oder einem organischen Amin in einer Mischung aus organischem Lösungsmittel und Wasser oder in Wasser umsetzt. In einer Ausführungsform der vorliegenden Erfindung führt man die zumindest partielle Hydrolyse so durch, dass man Vorstufen-Copolymer mit Ammoniak oder einem organischen Amin in Substanz oder einem organischem Lösungsmittel umsetzt und anschließend mit Wasser behandelt.

In einer anderen Ausführungsform der vorliegende Erfindung führt man die zumindest partielle Hydrolyse so durch, dass man Vorstufen-Copolymer mit einer oder mehreren Säuren, vorzugsweise Salzsäure, Schwefelsäure, Phosphorsäure, p-Toluolsulfonsäure und Methansulfonsäure in Gegenwart von Wasser und gegebenenfalls einem organischem Lösungsmittel umsetzt.

In einer Ausführungsform der vorliegenden Erfindung setzt man Vorstufen-Copolymer bei einer Temperatur im Bereich von 60 bis 150°C, besonders bevorzugt 75 bis 120°C um.

In einer Ausführungsform der vorliegenden Erfindung setzt man Vorstufen-Copolymer bei Normaldruck um. In einer anderen Ausführungsform der vorliegenden Erfindung setzt man Vorstufen-Copolymer bei einem Druck im Bereich von 1,1 bis 20 bar um, beispielsweise in einem Autoklaven.

In einer Ausführungsform der vorliegenden Erfindung setzt man Vorstufen-Copolymer in einem organischen Lösungsmittel um, gewählt aus Alkoholen, Diolen wie Ethylenglykol, Ethern, Toluol, Xylol und Dimethylsulfoxid, bevorzugt sind C₁-C₄-Alkanole wie beispielsweise Methanol, Ethanol, n-Propanol und n-Butanol und besonders bevorzugt Isopropanol.

Das Gewichts-Verhältnis Vorstufen-Copolymer zu organischem Lösungsmittel kann 20 : 1 bis 1 : 20 betragen.

Das Gewichts-Verhältnis Vorstufen-Copolymer zu Wasser kann 1 : 1 bis 1 : 100 betragen.

Die Reaktionsdauer zur partiellen Hydrolyse kann beispielsweise 30 Minuten bis 30 Stunden betragen.

In einer Ausführungsform der vorliegenden Erfindung setzt man, bezogen auf in Vorstufen-Copolymer einpolymerisierten Alkenylphosphonsäureester (c), 0,1 Äquivalente bis 100 Äquivalente, bevorzugt 1 Äquivalent bis 10 Äquivalente Hydroxid, Ammoniak oder organisches Amin ein.

In einer Ausführungsform der vorliegenden Erfindung dient anorganisches Hydroxid gleichzeitig als Neutralisationsmittel.

Ohne dass sich die Autoren auf eine bestimmte Theorie festlegen wollen, können sie nicht ausschließen, dass in den Fällen, in denen man bei der Hydrolyse Ammoniak oder ein primäres Amin einsetzt, als Zwischenstufen Verbindungen mit P-N-Bindungen gebildet werden.

Ein weiterer Gegenstand der vorliegenden Erfindung ist die Verwendung von erfindungsgemäßem Copolymer zur Behandlung von Oberflächen. Ein weiterer Gegenstand der vorliegenden Erfindung ist ein Verfahren zur Beschichtung von Oberflächen unter Verwendung von erfindungsgemäßem Copolymer, im Folgenden auch erfindungsgemäßes Behandlungsverfahren genannt.

Zur Durchführung des erfindungsgemäßen Behandlungsverfahrens geht man aus von einer oder mehreren Oberflächen, die aus beliebigem Material sein kann. Bevorzugt als Material sind Kunststoffe, besonders bevorzugt ein- oder mehrphasige Kunststoffblends bzw. Compounds, insbesondere mit technischen Thermoplastanteilen wie beispielsweise Polyethylen, Polypopylen, Polystyrol, Polyamiden, Polyacrylnitril, PMMA, und Metalle, wobei der Begriff "Metalle" im Sinne der vorliegenden Erfindung auch Legierungen umfasst. Besonders geeignete Legierungen sind solche mit vorwiegend Eisen, Aluminium, Nickel, Chrom, Kupfer, Titan, Zink, Zinn, Magnesium, Cobalt, wobei eine besonders geeignete Legierung Stahl ist, beispielsweise Chrom-Nickel-Stahl, Edelstahl oder auch verzinkter Stahl. Es kann sich bei aus einem oder mehreren der vorstehenden Metallen bestehenden Oberflächen um eine Beschichtung handeln, die eine Oberfläche aus einem anderen Metall, Holz oder Kunststoff, vollständig oder partiell bedeckt.

Erfindungsgemäß zu behandelnde Oberflächen können beliebige Formen annehmen, sie können eben oder gebogen sein, und es kann sich bei ihnen um Innen- oder Auβenoberflächen von einem oder mehreren Gegenständen handeln.

Erfindungsgemäß zu behandelnde Oberflächen können glatt sein, insbesondere für das unbewaffnete menschliche Auge ein glattes Erscheinungsbildung aufweisen, oder aber strukturiert, beispielsweise können sie Erhebungen oder Vertiefungen aufweisen, die beispielsweise punktförmig oder in Form von Rillen ausgestaltet sind.

Zur Durchführung des erfindungsgemäßen Behandlungsverfahrens kann man beispielsweise wie folgt vorgehen.

In einer Ausführungsform der vorliegenden Erfindung kann man so vorgehen, das man eine Metall- oder Polymeroberfläche mit einer Lösung von erfindungsgemäßem Copolymer benetzt. Dazu kann man beispielsweise so vorgehen, dass man erfindungsgemäßes Copolymer in einer Flüssigkeit, beispielsweise in einem organischen Lösungsmittel oder in Wasser, löst oder dispergiert oder emulgiert und dann mit der zu behandelnden Oberfläche kontaktiert. Auf eine anschließende Trocknung der erfindungsgemäß behandelten Oberfläche wird in dieser Ausführungsform verzichtet.

In einer Ausführungsform handelt es sich bei der zu behandelnden Oberfläche um die Innenoberfläche einer Einrichtung, die als Kühlkreislauf dient, beispielsweise in Automobilen oder Kraftwerken. Wünscht man erfindungsgemäß Oberflächen von Einrichtungen zu behandeln, die als Kühlkreisläufe dienen, so kann man erfindungsgemäßes Copolymer in einer Flüssigkeit, die gleichzeitig auch als Bestandteil des oder der Kühlmittel dienen kann, beispielsweise Salzlösung, lösen, dispergieren oder emulgieren und in den Kühlkreislauf einspeisen. Geeignete Konzentrationen von Erfindungsgemäßem Copolymer in der gesamten als Kühlmittel dienenden Flüssigkeit sind beispielsweise 0,05 bis 30 Gew.-%, bevorzugt 0,1 bis 10 Gew.-%. Man kann das Einspeisen von erfindungsgemäßem Copolymer einmalig durchführen oder kontinuierlich oder periodisch. Behandelt man erfindungsgemäß Oberflächen von Einrichtungen, die als Kühlkreisläufe dienen, so beobachtet man eine korrosionsinhibierende Wirkung.

In einer Ausführungsform der vorliegenden Erfindung handelt es sich bei Kühlkreisläufen um Bestandteile von Kühlschränke oder Gefriertruhen.

In einer Ausführungsform der vorliegenden Erfindung benetzt man eine Metall- oder Kunststoffoberfläche beim Bohren, Fräsen, Drehen, Schneiden, Schleifen, Gewindeschneiden oder beim Walzen und/oder Ziehen mit Lösung von erfindungsgemäßem Copolymer.

In einer anderen Ausführungsform der vorliegenden Erfindung versieht man eine Metall- oder Polymeroberfläche, die nicht vorbehandelt oder vorbehandelt sein kann, mit einer Schicht von erfindungsgemäßem Copolymer. Dazu kann man beispielsweise so vorgehen, dass man erfindungsgemäßem Copolymer in Form eines Films auf die zu behandelnde Oberfläche aufbringt und danach trocknet. Während des Trocknens kann der Film von erfindungsgemäßem Copolymer aushärten.

Bei erfindungsgemäß vorbehandelten oder nicht vorbehandelten Metall- oder Polymeroberflächen handelt es sich vorzugsweise um Oberflächen unedler Metalle, beispielsweise um Oberflächen aus Eisen, Stahl, Zink oder Zink-Legierungen, Aluminium oder Aluminium-Legierungen, Zinn oder Zinn-Legierungen, Magnesium- oder Magnesium-Legierungen. Bei Stählen kann es sich sowohl um niedrig legierte als auch um hochlegierte Stähle handeln.

Das erfindungsgemäße Verfahren eignet sich insbesondere zum Passivieren von Oberflächen aus Zink, Zink-Legierungen, Aluminium oder Aluminium-Legierungen. Es kann sich dabei um Oberflächen von vollständig aus den vorstehend genannten Metallen bzw. der vorstehend genannten Legierung bestehenden Körpern oder Werkstücken handeln. Es kann sich aber auch um Oberflächen von mit Zink, Zink-Legierungen, Aluminium oder Aluminium-Legierungen beschichteten Körpern oder Werkstücken handeln, wobei die betreffenden Körper oder Werkstücke aus anderen Materialien, beispielsweise aus anderen Metallen, Legierungen, Polymeren oder Verbundwerkstoffen bestehen kann. Insbesondere kann es sich um die Oberfläche von verzinktem Eisen oder Stahl handeln. Der Begriff "verzinkt" umfasst auch das Beschichten mit einer Zink-Legierung, insbesondere die Feuerverzinkung mit ZnAl-Legierungen und elektrolytische Verzinkung mit ZnNi, ZnFe, ZnMn- und ZnCo-Legierungen.

Zn- oder Al-Legierungen sind dem Fachmann bekannt. Typische Bestandteile von Zink-Legierungen umfassen insbesondere Al, Mg, Pb, Si, Mg, Sn, Cu oder Cd. Es kann sich auch um Al/Zn-Legierungen handeln, bei denen Al- und Zn in annähernd gleicher Menge vorhanden sind. Bei Beschichtungen kann es sich um weitgehend homogene Beschichtungen oder auch um Konzentrationsgradienten aufweisende Beschichtungen handeln. Beispielsweise kann es sich um verzinkten Stahl handeln, der zusätzlich mit Mg bedampft wurde. Hierdurch kann oberflächlich eine Zn/Mg-Legierung entstehen. Typische Bestandteile von Aluminium-Legierungen umfassen insbesondere Mg, Mn, Si, Zn, Cr, Zr, Cu oder Ti.

In einer bevorzugten Ausführungsform des erfindungsgemäßen Verfahrens handelt es sich um die Oberfläche eines Bandmetalles, bevorzugt aus Aluminium oder Aluminium-Legierungen oder Eisen bzw. Stahl, insbesondere Bänder aus elektrolytisch verzinktem oder heißverzinktem Stahl.

Man kann die Oberfläche, die man erfindungsgemäß mit erfindungsgemäßem Copolymer zu behandeln wünscht, insbesondere Oberfläche aus Metall, zunächst vorbehandeln, beispielsweise reinigen, insbesondere entfetten und/oder entölen. In vielen Ausführungsformen umfasst ein Entfetten bzw. Entölen auch noch einen oder mehrere vorgeschaltete Vorreinigungsschritte. Nach dem gegebenenfalls durchgeführten Vorreinigungsschritt entfernt man verunreinigendes Fett oder Öl, das beispielsweise in Form von Flecken oder einer Öl- bzw. Fettschicht ausgebildet sein kann, im eigentlichen Reinigungsschritt mit Hilfe von mindestens einem Reinigungsbad, beispielsweise durch Eintauchen, oder mit Hilfe von mindestens einem auf die zu reinigende Oberfläche aufzubringenden Reinigungsmittel, das man aufsprühen, über die zu reinigende Oberfläche gießen oder mit Hilfe beispielsweise eines Schlauches aufspritzen kann. Die Reste an Reinigungsbad bzw. Reinigungsmittel kann man anschließend entfernen, beispielsweise mit einem oder mehreren aufeinander folgenden Spülbädern, und schließlich trocknet man die Oberfläche. Entfettungs- bzw. Entölungsbäder müssen in regelmäßigen Abständen entsorgt werden. Zur Entsorgung wird das im Entfettungs- bzw. Entölungsbad angesammelte Fett bzw. Öl in einem weiteren Arbeitsschritt von der wässrigen Phase abgetrennt. Aufgrund der Anwesenheit von Tensiden im Entfettungs- bzw. Entölungsbad sind zur Entsorgung weitere Chemikalien (Demulgatoren, Spalter) als Hilfsmittel erforderlich. Einzelheiten zum Entfetten bzw. Entölen von Metallen sowie dazu hilfreiche Formulierungen und Apparaturen sind beispielsweise unter dem Stichwort "Metals, Surface Treatment", in Ullmann's Encyclopedia of Industrial Chemistry, 6. Auflage, 2000, Wiley-VCH-Verlag GmbH, Weinheim Germany, dargestellt.

In einer Ausführungsform entfettet bzw. entölt man mit einem wässrigen Reinigungs- bzw. Entfettungsbad, bevorzugt in einem alkalischen Reinigungsbad bzw. einem alkalischen Entfettungsbad, das als Tensid ein oder mehrere sulfatierte polyalkoxylierte Fettalkohole oder ein oder mehrere sulfatierte polyalkoxylierte Phenole, beispielsweise jeweils mit einem Molekulargewicht Mₙ im Bereich von 800 bis 3000 g/mol, in einer Konzentration enthält, die beispielsweise im Bereich von 0,01 bis 20 Gew.-%, bevorzugt 0,02 bis 10 Gew.-% und besonders bevorzugt mindestens 0,1 Gew.-% liegen kann. Eingesetztes alkalisches Reinigungs- bzw. Entfettungsbad kann beispielsweise einen pH-Wert im Bereich von 8 bis 14, bevorzugt mindestens 9 und besonders bevorzugt 11 bis 13 aufweisen.

Reinigungs- bzw. Entfettungsbäder, insbesondere alkalische Reinigungs- bzw. Entfettungsbäder können eine Temperatur im Bereich von 10 bis 80°C aufweisen.

Das Reinigen bzw. Entfetten oder Entölen kann man beispielsweise über einen Zeitraum im Bereich von 0,1 bis 30 Sekunden durchführen.

Im Anschluss an eine gegebenenfalls durchgeführte Vorbehandlung bringt man erfindungsgemäßes Copolymer auf die erfindungsgemäß zu behandelnde Oberfläche auf. Dazu kann man sich gängiger Techniken bedienen. Beispielsweise kann man eine Formulierung, gewählt aus Lösungen, Dispersionen oder Emulsionen von Erfindungsgemäßem Copolymer, oder eine Schmelze von Erfindungsgemäßem Copolymer, bevorzugt eine Dispersion auf eine gegebenenfalls vorbehandelte Oberfläche aufbringen und dadurch eine Schicht von erfindungsgemäßem Copolymer erzeugen. Man kann erfindungsgemäß für eine ungleichmäßige oder vorzugsweise gleichmäßige Schichtdicke von erfindungsgemäßem Copolymer sorgen.

In einer Ausführungsform der vorliegenden Erfindung kann man das Aufbringen als Spritzen, Sprühen, Tauchen, Rakeln, Walzen, Streichen oder elektrophoretisches Lackieren ausführen.

Die Schichtdicke von erfindungsgemäßem Copolymer kann beispielsweise im Bereich von 10 nm bis 100 µm liegen, bevorzugt 100 nm bis 10 µm. Die Schichtdicke von erfindungsgemäßem Copolymer lässt sich beispielsweise über die Art und Menge der aufgetragenen Komponenten sowie die Einwirkzeit beeinflussen. Bevorzugt ist die Einstellung der Schichtdicke von erfindungsgemäßem Copolymer über die Konzentration von erfindungsgemäßem Copolymer in der zur Beschichtung eingesetzten vorzugsweise wässrigen Formulierung. Weiterhin lässt sie sich durch verfahrenstechnische Parameter beeinflussen, beispielsweise durch Abrakeln oder Abwalzen zu viel aufgebrachter Formulierung. Die Schichtdicke im Rahmen der vorliegenden Erfindung wird nach dem Trocknen gemessen, man kann sie gravimetrisch oder mittels Röntgenfluoreszenz (Phosphor) bestimmen.

Bevorzugt bringt man erfindungsgemäßes Copolymer zum Beschichten als Formulierung in einem geeigneten Lösemittel oder einem Gemisch verschiedener Lösemittel auf. Besonders bevorzugt wird Wasser als einziges Lösemittel eingesetzt. Weitere Komponenten eines Gemisches verschiedener Lösemittel umfassen insbesondere mit Wasser mischbare Lösungsmittel. Beispielhaft seien genannt: Monoalkohole wie Methanol, Ethanol oder Propanol, höhere Alkohole wie Ethylenglykol oder Polyetherpolyole und Etheralkohole wie n-Butylglykol oder Methoxypropanol. Ein bevorzugtes Gemisch von Wasser mit organischen Lösemitteln umfasst mindestens 75 Gew. %, besonders bevorzugt mindestens 85 Gew.-% und ganz besonders bevorzugt mindestens 95 Gew.-% Wasser. Die Angaben beziehen sich jeweils auf die Gesamtmenge der zur Herstellung der betreffenden Formulierung verwendeten Lösemittel.

Erfindungsgemäßes Copolymer kann man in Lösemittel bzw. Lösemittelgemisch lösen, emulgieren oder dispergieren. Bevorzugt setzt man zur Durchführung des erfindungsgemäßen Verfahrens eine Dispersion von erfindungsgemäßem Copolymer ein, die ebenfalls Gegenstand der vorliegenden Erfindung ist. Die Konzentration von erfindungsgemäßem Copolymer kann beispielsweise 0,1 bis 40 Gew.-%, bevorzugt 1 bis 30 Gew.-% und besonders bevorzugt 3 bis 25 Gew.-% betragen. Die vorstehend genannten Mengenangaben beziehen sich auf die Summe aller Komponenten der Formulierung. Bevorzugt formuliert man erfindungsgemäßes Copolymer in Wasser als einzigem Lösemittel, und die Konzentration von erfindungsgemäßem Copolymer liegt im Bereich von 0,5 bis 40 Gew. %.

Man kann auch Gemische von zwei oder mehreren erfindungsgemäßen Copolymeren einsetzen.

Die erfindungsgemäße Formulierung kann über die genannten Komponenten Lösemittel und erfindungsgemäßes Copolymer hinaus noch weitere Komponenten umfassen, die im Rahmen der vorliegenden Erfindung auch als Zusatzstoffe bezeichnet werden. Bei Zusatzstoffen kann es sich beispielsweise um anorganische oder organische Säuren handeln, die als Neutralisationsmittel oder als Puffer dienen können. Weitere optional verwendete Zusatzstoffe umfassen oberflächenaktive Verbindungen (Dispergiermittel, Emulgiermittel, Tenside), Korrosionsinhibitoren wie beispielsweise Antioxidantien, hydrotrope Mittel, Gefrierschutzmittel, Biozide, Komplexbildner, Trägerstoffe, Wachse, Metallsalze, Basen und weitere, von erfindungsgemäßem Copolymer verschiedene Polymere. Dabei kann ein Zusatzstoff mehr als nur eine Funktion haben.

Beispielhaft zu nennende oberflächenaktive Verbindungen sind Tenside, Emulgiermittel und/oder Dispergiermittel, die kationisch, anionisch, zwitterionisch oder nichtionisch sein können. Geeignete Tenside sind beispielsweise Alkyl- und Alkenylalkoxylate vom Typ R⁹-EOᵥ/PO_{w} wobei R⁹ im allgemeinen lineare oder verzweigte C₆-C₃₀-Alkyl- oder Alkenylreste, bevorzugt C₈-C₂₀-Alkylreste sind und EO für eine Ethylenoxid-Einheit und PO für eine Propylenoxid-Einheit steht, wobei EO und PO in beliebiger Reihenfolge, auch statistisch, angeordnet sein können und v und w gleich oder vorzugsweise verschieden sein können und vorzugsweise ≤ 100 sind mit der Maßgabe, dass v und w nicht gleichzeitig null sind, bevorzugt ist v oder w im Bereich von 3 bis 50. Beispiele für kommerziell erhältliche nichtionische Tenside sind Emulan®, Lutensol® und Plurafac® der BASF Aktiengesellschaft. Weitere Beispiele sind Alkylphenolethoxylate, EO/PO-Blockcopolymere wie etwa EO₇PO₈EO₇. Beispiele für geeignete anionische Tenside sind R⁹EOᵥSO₃Na und R⁹EOᵥSO₃K. Beispiele für geeignete kationische Tenside sind Alkylammoniumsalze, beispielsweise Sulfate oder Halogenide von R⁹N(CH₃)₃, sog. Quats.

Beispielhaft zu nennende Korrosionsinhibitoren sind Butindiol, Benztriazol, Aldehyde, Amincarboxylate, Benztriazole, Derivate des Benztriazols wie Methylenbenztriazol und 2-Mercaptobenztriazol, Amino- und Nitrophenole, Aminoalkohole wie beispielsweise Triethanolamin, Aminobenzimidazol, Imidazoline, Aminoimidazoline, Aminotriazol, Benzimidazolamine, Benzothiazole, Borsäureester mit Alkanolaminen wie beispielsweise Borsäurediethanolaminester, Carbonsäuren und ihre Ester, Chinolinderivate, Dibenzylsulfoxid, Dicarbonsäuren und ihre Ester, Diisobutenylbernsteinsäure, Dithiophosphonsäure, Fettamine und Fettsäureamide, Guanidin und Guanidinderivate, Harnstoff und Harnstoffderivate, Laurylpyridiniumchlorid, Maleinsäureamide, Mercaptobenzimidazol, N-2-Ethylhexyl-3-aminosulfopropionsäure, Phosphoniumsalze, Phthalsäureamide, Amin- und Natrium- neutralisierte Phosphorsäuremono- und Diester von C₁-C₂₀-Alkylalkoholen sowie die entsprechenden Phosphorsäureester selbst, Phosphorsäureester von Polyalkoxylaten und insbesondere von Polyethylenglykol, Polyetheramine, Sulfoniumsalze, Sulfonsäuren wie beispielsweise Methansulfonsäure, Thioether, Thioharnstoffe, Thiuramidsulfide, Zimtsäure und ihren Derivaten, Zinkphosphate und -silikate, Zirkonphosphate und -silikate. Korrosionsinhibitoren werden - falls sie in erfindungsgemäßen Zusammensetzungen eingesetzt werden - in einer Menge von im allgemeinen 0,01 bis 50 g/l, bevorzugt 0,1 bis 20 g/l, besonders bevorzugt 1 bis 10 g/l eingesetzt.

Dispergiermittel kann man unstabilisiert oder stabilisiert mit einem oder mehreren Verdickungsmittel einsetzen. Geeignete Verdickungsmittel sind beispielsweise unmodifizierte oder modifizierte Polysaccharide vom Xanthan-, Alginat-, Guar- oder Cellulosetyp. Besonders geeignete modifizierte Polysaccharide sind Methylcellulose und Carboxymethylcellulose.

Beispielhaft zu nennende hydrotrope Mittel sind Harnstoff und Natriumxylolsulfonat.

Beispielhaft zu nennende Gefrierschutzmittel sind Ethylenglykol, Propylenglykol, Diethylenglykol, Glycerin und Sorbit.

Beispielhaft zu nennende Biozide sind 2-Brom-2-nitropropan-1,3-diol, Glutaraldehyd, Phenoxyethanol bzw. -propanol, Glyoxal, 2,4-Dichlorbenzylalkohol, Chloracetamid, Formalin, 1,2-Benzisothiazolin-3-on, Silber und Polyvinylpyrrolidon-Jod.

Beispielhaft zu nennende Komplexbildner sind beispielsweise Nitrilotriessigsäure, Ethylendiamintetraessigsäure, Methylglycindiessigsäure, Diethylenpentaminpentaessigsäure sowie deren jeweilige Salze, insbesondere Alkalimetallsalze.
Geeignete Trägerstoffe sind Polycarbonsäuren, beispielsweise Poly(meth)acrylsäure oder Polymaleinsäure, gegebenenfalls partiell oder vollständig neutralisiert, partiell oder vollständig hydrolysiertes Polyacrylnitril, Polyacrylamid, Copolymere von Polyacrylamid, Ligninsulfonsäure und deren Salze, Stärke, Stärkederivate (z. B. oxidierte Stärke), Cellulose, C₁-C₁₀-Alkylphosphonsäure, 1-Aminoalkyl-1,1-Diphosphonsäure.
Beispielhaft zu nennende Metallsalze sind Phosphate. Dabei kann es sich um gelöste oder partikuläre Phosphate handeln. Beispielsweise kann es sich um Orthophosphate, Hydrogenphosphate, Dihydrogenphosphate oder um Diphosphate (Pyrophosphate) handeln. Beispiele geeigneter Phosphate umfassen Zn₃(PO₄)₂, Zn(H₂PO₄)₂, Mg₃(PO₄)₂ und Ca(H₂PO₄)₂ bzw. entsprechende Hydrate.

Beispielhaft zu nennende Säuren sind Phophorsäure, Phosphorige Säuren, Methanphosphonsäure, Phosphonsäure.

Beispielhaft zu nennende von erfindungsgemäßem Copolymer verschiedene Polymere sind Polyacrylate, Polyurethane, Polyamide, jeweils bevorzugt in wassergelöster oder in Wasser dispergierter Form.

In einer besonders bevorzugten Ausführungsform enthält erfindungsgemäße Formulierung mindestens ein dispergiertes Wachs. Der Begriff "Wachs" ist dem Fachmann bekannt und beispielsweise in Römpp Lexikon der Chemie, Stichwort "Lacke und Druckfarben", Georg Thieme Verlag, Stuttgart, New York 1998, S. 615/616 oder Ullmann's Encyclpedia, 6. Auflage, Stichwort Waxes; 1.2. Definition" definiert und umfasst fluorierte wachsartige Substanzen wie beispielsweise sogenannte PTFE-Wachse (siehe z.B. Römpp, a.a.O. Seiten 466/467).

Bevorzugte Wachse sind oligo- oder polymere Substanzen, die ein Molekulargewicht M_{w} von 1.000 bis 100.000 g/mol, besonders bevorzugt 2.000 bis 30.000 g/mol aufweisen.

In einer Ausführungsform der vorliegenden Erfindung weisen bevorzugte Wachse einen Gewichtsanteil von insgesamt mindestens 50 Gew.-% an Strukturelementen auf, ausgewählt aus der Gruppe von (-CH₂-CH₂-), (-CH₂-CH<), (-CH₂CH(CH₃)-), (CH₃), [C(R⁸)₂-C(R⁸)₂] und [C(R⁸)₂-C(R⁸)(C(R⁸)₃)] aufweisen, wobei R⁸ gleich oder verschieden sein können und für H oder F stehen, und mit der Maßgabe, dass die genannten Strukturelemente so miteinander verbunden sind, dass sie überwiegend Einheiten von wenigstens 12 direkt miteinander verknüpften Kohlenstoffatomen umfassen. Selbstverständlich kann eine Mischung verschiedener Wachse eingesetzt werden.

Wachse können auch Säurefunktionen aufweisen, insbesondere Carbonsäuregruppen, die neutralisiert oder unneutralisiert vorliegen können. Wachse mit einer Säurezahl ≤ 200 mg KOH/g, bestimmt nach DIN 53402, sind bevorzugt. Besonders bevorzugt sind Wachse mit einer Säurezahl im Bereich von 10 bis 190 mg KOH/g. Wachse, die einen Schmelzpunkt aufweisen, sind bevorzugt. Besonders bevorzugt sind Wachse mit einem Schmelzpunkt von 40 bis 150°C. Insbesondere sind Wachse mit einem Schmelzpunkt im Bereich von 50 bis 120°C bevorzugt.

Beispiele besonders geeigneter Wachse zur Ausführung der vorliegenden Erfindung umfassen [CAS-Nummern in eckigen Klammern]:
Polyethylenwachs [9002-88-4],
Paraffinwachs [8002-74-2],
Montanwachs und Montanwachsraffinate, beispielsweise [8002-53-7],
Polyethylen-Polypropylenwachse,
Polybutenwachse,
Fischer-Tropsch-Wachse,
Carnaubawachs,
oxidierte Wachse, beispielsweise oxidiertes Polyethylenwachs entsprechend [68441-17-8],
copolymere Polyethylenwachse, beispielsweise Copolymere des Ethylens mit Acrylsäure, Methacrylsäure, Maleinsäureanhydrid, Vinylacetat, Vinylalkohol beispielsweise [38531-18-9], [104912-80-3], [219843-86-4] oder Copolymere des Ethylens mit mehreren der vorstehend genannten Monomere,
polare modifizierte Polypropylenwachse, beispielsweise [25722-45-6],
mikrokristalline Wachse, beispielsweise mikrokristalline Paraffinwachse [63231-60-7], Montansäuren, beispielsweise [68476-03-9],
Metallsalze von Montansäuren, beispielsweise Natriumsalze [93334-05-5] und Calciumsalze [68308-22-5],
Ester langkettiger Carbonsäuren mit langkettigen Alkoholen, beispielsweise Stearinsäure-n-octadecylester [2778-96-3],
Montansäureester mehrwertiger Alkohole, beispielsweise Montanwachsglyceride [68476-38-0], auch teilverseift, Montansäureester des Trimethylolpropans [73138-48-4], auch teilverseift, Montansäureester des 1,3-Butandiols [73138-44-0], auch teilverseift, Montansäureester des Ethylenglykols [73138-45-1], auch teilverseift, Montanwachsethoxylate, beispielsweise [68476-04-0],
Fettsäureamide, beispielsweise Erucamid [112-84-5], Oleamid [301-02-0] und 1,2-Ethylenebis(stearamid) [110-30-5]
langkettige Ether, beispielsweise n-Octadecylphenylether

Des Weiteren sind Mischungen von Wachsen geeignet, beispielsweise
- Mischungen aus Stearinsäure-n-octadecylester und teilverseiften Montansäureestern mehrwertiger Alkohole
- Mischungen aus Paraffinwachsen und teilverseiften Montansäureestern mehrwertiger Alkohole und/oder Montansäuren
- Mischungen aus Polyethylenwachs und Polyethylenglykol

Besonders bevorzugte Wache sind solche, die sich besonders einfach in erfindungsgemäße Formulierung einarbeiten lassen, wie beispielsweise mikronisierte Wachse und/oder Wachsdispersionen.

Mikronisierte Wachse im Sinne der vorliegenden Erfindung sind besonders feinteilige Pulver mit einem mittleren Partikeldurchmesser bevorzugt unter 20 µm, besonders bevorzugt 2 bis 15 µm. Wachsdispersionen sind wässrige Zubereitungen von Wachsen, die Wasser, optional weitere, mit Wasser mischbare Lösemittel, sphärische Wachspartikel sowie in der Regel ein oder mehrere Hilfsmittel enthalten. Bevorzugte Wachsdispersionen zum Einsatz bei der vorliegenden Erfindung weisen einen mittleren Partikeldurchmesser unter 1 µm auf, bevorzugt 20 bis 500 nm, besonders bevorzugt 50 bis 200 nm. Mikronisierte Wachse und Wachsdispersion sind kommerziell erhältlich.

Hilfsmittel werden in Wachsdispersionen beispielsweise eingesetzt, um die Dispergierbarkeit des Wachses und dessen Lagerstabilität gewährleisten. Bei Hilfsmitteln kann es sich beispielsweise um Basen zur Neutralisation oder Teilneutralisation von Säurefunktionen im Wachs handeln, beispielsweise Alkalimetallhydroxide, Ammoniak, Amine oder Alkanolamine. Säuregruppen können auch mit Kationen, beispielsweise Ca⁺⁺ oder Zn⁺⁺ neutralisiert oder teilneutralisiert sein. Weiterhin kann es sich um grenzflächenaktive Substanzen handeln, bevorzugt um nichtionische Tenside oder anionische Tenside. Beispiele nichtionischer Tenside umfassen Ethoxylate und Propoxylate auf Basis Alkoholen und Hydroxyaromaten sowie deren Sulfatierungs- und Sulfonierungsprodukte. Beispiele anionischer Tenside umfassen Alkylsulfonate, Arylsulfonate sowie Alkylarylsulfonate.

Zur Ausführung der vorliegenden Erfindung insbesondere geeignet sind Wachsdispersionen mit einem pH-Wert im Bereich von 8 bis 11.

Erfindungsgemäß wird Wachs in einer Menge von 0,01 bis 60 Gew.-%, bevorzugt 0,1 bis 40 Gew.-%, besonders bevorzugt 0,25 bis 20 Gew.-%, ganz besonders bevorzugt 0,5 bis 10 Gew. % und beispielsweise 1 bis 5 Gew. % eingesetzt, jeweils bezogen auf gesamte erfindungsgemäße Formulierung.

In einer Ausführungsform der vorliegenden Erfindung enthalten erfindungsgemäße Formulierungen insgesamt im Bereich von 0,01 bis 600 g/l, bevorzugt 0,1 bis 100 g/l Zusatzstoff(e).

Die Dauer der Behandlung mit erfindungsgemäßem Copolymer kann im Bereich von deutlich weniger als eine Sekunde bis zu mehreren Minuten betragen, beispielsweise im Bereich von 0,1 Sekunden bis 10 Minuten. Beim kontinuierlichen Verfahren hat es sich besonders bewährt, die zu behandelnde Oberfläche mit erfindungsgemäßem Copolymer für eine Dauer von 1 bis 60 Sekunden in Kontakt zu bringen.

In einer speziellen Ausführungsform der vorliegenden Erfindung formuliert man erfiridungsgemäßes Copolymer in einen Pulverlack ein und bringt es nach einem Verfahren der Pulverlackbeschichtung (engl. Powder coating) auf die erfindungsgemäß zu behandelnde Oberfläche auf.

In einer Variante des erfindungsgemäßen Verfahrens versieht man eine Metall- oder Polymeroberfläche, die nicht vorbehandelt oder vorbehandelt sein kann, mit einer Schicht von erfindungsgemäßem Copolymer und danach mit einem weiteren Beschichtungsmittel, beispielsweise mit einem Lack, insbesondere mit einem Pulverlack. In einer speziellen Variante beschichtet man eine Metall- oder Kunststoffoberfläche zunächst mit erfindungsgemäßem Copolymer und bringt anschließend einen Pulverlack auf.

Wünscht man das erfindungsgemäße Beschichten durch Tauchen zu bewirken, so erfolgt das Beschichten bei einer Temperatur des betreffenden Tauchbads im Bereich von 15 bis 90°C, bevorzugt 25 bis 80°C und besonders bevorzugt 30 bis 60°C. Dazu kann man das Tauchbad, das erfindungsgemäßes Copolymer enthaltende Formulierung umfasst, heizen. Wünscht man erfindungsgemäß Gegenstände zu beschichten, die eine Metalloberfläche aufweisen, kann man eine erhöhte Temperatur auch automatisch einstellen, indem man das betreffende warme Metall in das Tauchbad, das erfindungsgemäßes Copolymer enthaltende Formulierung umfasst, eintaucht.

Wünscht man das erfindungsgemäße Verfahren durch Sprühen, Spritzen, Streichen, Rakeln, Walzen oder elektrophoretisches Lackieren durchzuführen, so kann man vorzugsweise bei einer Temperatur im Bereich von 15 bis 40°C, bevorzugt 20 bis 30°C arbeiten.

Das erfindungsgemäße Verfahren kann man diskontinuierlich oder bevorzugt kontinuierlich ausführen. Bei einem diskontinuierlichen Verfahren kann es sich beispielsweise um ein Tauchverfahren für Stückgut handeln, bei dem das Stückgut an Gestellen aufgehängt sein oder in perforierten Trommeln als lose Ware vorliegen kann. Ein kontinuierliches Verfahren eignet sich insbesondere zum Behandeln von Bandmetallen. Das Bandmetall wird hierbei durch eine Wanne oder eine Sprühvorrichtung mit einer Formulierung, die erfindungsgemäßes Copolymer enthält, sowie optional durch weitere Vor- oder Nachbehandlungsstationen gefahren.

In einer Variante des erfindungsgemäßen Verfahrens behandelt man die Metall- oder Polymeroberfläche nach einem kontinuierlichen Bandverfahren.

Nach dem eigentlichen Aufbringen von erfindungsgemäßem Copolymer trocknet man. Das Trocknen kann bei Raumtemperatur durch einfaches Verdampfen an Luft bei Raumtemperatur erfolgen.

Das Trocknen kann man auch durch geeignete Hilfsmittel und/oder Hilfsmaßnahmen unterstützen, beispielsweise durch Erwärmen und/oder durch Überleiten von Gasströmen, insbesondere Luftströmen, insbesondere durch Trocknen in einem Trockenkanal. Das Trocknen kann auch durch IR-Strahler unterstützt werden. Bewährt hat sich zum Trocknen eine Temperatur von 40°C bis 160°C, bevorzugt 50°C bis 150°C und besonders bevorzugt 70°C bis 130°C. Gemeint ist die Temperatur auf der Polymer- bzw. Metalloberfläche; die Trocknertemperatur muss man gegebenenfalls höher einstellen.

Vor dem eigentlichen Trocknen kann man zum Entfernen überschüssiger Formulierung den Gegenstand mit erfindungsgemäßem Copolymer beschichteten Oberfläche abtropfen lassen. Wenn es sich bei dem Gegenstand mit erfindungsgemäßem Copolymer beschichteten Oberfläche um Bleche oder Metallfolien handelt, so lässt sich überschüssige Formulierung beispielsweise abquetschen oder abrakeln.

Es ist möglich, die Oberfläche nach der erfindungsgemäßen Behandlung, aber vor dem Trocknen mit einer Reinigungsflüssigkeit, insbesondere mit Wasser, nachzuspülen, um überschüssige Reste der eingesetzten Formulierung von der erfindungsgemäß behandelten Oberfläche zu entfernen. Danach trocknet man.

Es ist auch möglich, das Trocknen man nach Art eines so genannten "No-rinse" Prozesses durchzuführen. Unmittelbar nach dem Aufbringen von erfindungsgemäßem Copolymer enthaltender Formulierung trocknet man sie ohne vorheriges Abspülen in einem Trockenofen ein.

Durch die Behandlung von Oberflächen mit erfindungsgemäßem Copolymer werden zumindest Anteile von erfindungsgemäßem Copolymer sowie gegebenenfalls weitere Komponenten der Formulierung von der Oberfläche des Polymers oder Metalls chemisorbiert und/oder reagieren mit der Oberfläche, so dass eine feste Bindung zwischen Oberfläche und erfindungsgemäßem Copolymer zustande kommt.

Erfindungsgemäß beschichtete Oberflächen kann man in prinzipiell bekannter Art und Weise mit einer oder mehreren übereinander aufgebrachten Lackschichten versehen. Beispielsweise kann es sich um farb- oder effektgebende Lackschichten handeln. Typische Lacke, deren Zusammensetzung sowie typische wie Schichtfolgen bei mehreren Lackschichten sind an sich bekannt. Man beobachtet, dass die erfindungsgemäß aufgebrachte Beschichtung mit handelsüblichen Lacken in vielen Fällen gut überlackierbar ist.

In einer Ausführungsform der vorliegenden Erfindung bringt man auf die gegebenenfalls vorbehandelte Oberfläche, die man zu beschichten wünscht, vor dem eigentlichen Beschichten einen sogenannten Primer auf. Beispielhaft zu nennende Primer sind Polyamine und Polyethylenimine. Danach beschichtet man mit erfindungsgemäßem Copolymer, wie vorstehend beschrieben. Dabei stellt man bevorzugt eine Schichtdicke von erfindungsgemäßem Copolymer im Bereich von ≥ 4 µm bis 100 µm ein. Danach kann man mit einer oder mehreren Lackschichten versehen.

In einer anderen Ausführungsform der vorliegenden Erfindung bringt man erfindungsgemäßes Copolymer als Primer auf, beispielsweise mit einer Schichtdicke 50 nm bis 50 µm, bevorzugt 100 nm bis 10 µm, ganz besonders bevorzugt von 300 nm bis 3 µm. Danach kann man eine oder mehrere Lackschichten aufbringen.

In einer anderen Ausführungsform der vorliegenden Erfindung bringt man erfindungsgemäßes Copolymer als Lack oder Bestandteil eines Lacks auf, vorzugsweise auf eine nicht vorbehandelte Oberfläche aus Metall. In dieser Ausführungsform ist eine Schichtdicke von erfindungsgemäßem Copolymer im Bereich von 100 nm bis 3 µm bevorzugt.

Ein weiterer Gegenstand der vorliegenden Erfindung sind Polymer- oder Metalloberflächen, beschichtet mit erfindungsgemäßem Copolymer, das als Comonomere einpolymerisiert enthält:
(a) Ethylen,
(b) eine oder mehrere Verbindungen der allgemeinen Formel I, wie vorstehend definiert,
(c) einen oder mehrere Alkenylphosphonsäurediester,
(d) gegebenenfalls ein oder mehrere weitere radikalisch copolymerisierbare Comonomere.

Ein weiterer Gegenstand der vorliegenden Erfindung sind Gegenstände mit mindestens einer erfindungsgemäßen Oberfläche.

Erfindungsgemäße Oberflächen und demgemäss Gegenstände mit erfindungsgemäβen Oberflächen weisen einen besonders guten Korrosionsschutz auf, beispielsweise eine verbesserte oxidative Korrosionsstabilität gegenüber festen, flüssigen und gasförmigen oxidierend wirkenden Medien.

Ein weiterer Gegenstand der vorliegenden Erfindung sind wässrige Formulierungen, beispielsweise wässrige Lösungen, wässrige Emulsionen und insbesondere wässrige Dispersionen, enthaltend 0,01 bis 40 Gew.-% erfindungsgemäßes Copolymer, das als Comonomere einpolymerisiert enthält:
(a) Ethylen,
(b) eine oder mehrere Verbindungen der allgemeinen Formel I, wie vorstehend definiert,
(c) gegebenenfalls einen oder mehrere Alkenylphosphonsäurediester,
(d) gegebenenfalls ein oder mehrere weitere radikalisch copolymerisierbare Comonomere.

In einer Ausführungsform der vorliegenden Erfindung können erfindungsgemäße wässrige Formulierungen mindestens einen Zusatzstoff enthalten, gewählt aus Dispergiermitteln, Tensiden, Korrosionsinhibitoren, Antioxidatien, Bioziden, Wachsen, Komplexbildnern, Metallsalzen, Säuren und Basen.

### Arbeitsbeispiele

### I. Herstellung von Vorstufen-Copolymeren

### I.1 Herstellung von Vorstufen-Copolymer (A.1) bis (A.5) sowie (A.11) und (A.12)

In einem Hochdruckautoklaven, wie er in der Literatur beschrieben ist (M. Buback et al., Chem. Ing. Tech. 1994, 66, 510), wurden Ethylen, die in Tabelle 1 angegebene Menge Vinylphosphonsäuredimethylester II.1 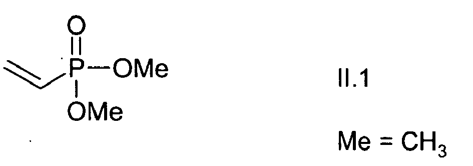 entweder in Substanz oder als Lösung in Toluol (Konzentration s. Tabelle 1) und gegebenenfalls Methacrylsäure (Tabelle 1) copolymerisiert. Dazu wurde Ethylen (10,0 bzw. 12,0 kg/h) unter dem Druck von 1700 bar kontinuierlich in den Hochdruckautoklaven eingespeist. Vinylphosphonsäuredimethylester wurde mit Hilfe einer Hochdruckpumpe unter dem Druck von 1700 bar in den Hochdruckautoklaven kontinuierlich dosiert. Getrennt davon wurde gegebenenfalls die in Tabelle 1 angegebene Menge Methacrylsäure mit einem Kompressor zunächst auf einen Zwischendruck von 260 bar verdichtet und anschließend mit Hilfe eines weiteren Kompressors unter dem Reaktionsdruck von 1700 bar in den Hochdruckautoklaven kontinuierlich eingespeist. Getrennt davon wurde die in Tabelle 1 angegebene Menge Initiatorlösung, bestehend aus tert.-Amylperoxypivalat (in Isododekan, Konzentration siehe Tabelle 1), unter dem Reaktionsdruck von 1700 bar in den Hochdruckautoklaven kontinuierlich eingespeist. Getrennt davon wurde die in Tabelle 1 angegebene Menge Propionaldehyd (in Substanz oder als Lösung in Isododekan, (Konzentration siehe Tabelle 1) mit einem Kompressor zunächst auf einen Zwischendruck von 260 bar verdichtet und anschließend mit Hilfe eines weiteren Kompressors unter dem Reaktionsdruck von 1700 bar in den Hochdruckautoklaven kontinuierlich eingespeist. Die Reaktionstemperatur betrug etwa 220°C. Man erhielt Vorstufen-Copolymer mit den aus Tabelle 2 ersichtlichen analytischen Daten.

In den Beispielen (A.11) und (A.12) wurde ein Rohrreaktor verwendet, wie er in EP 0 101 343 beschrieben ist (Länge: 595 m, Innendurchmesser: 15/21 mm) mit einem Verhältnis Länge/Durchmesser von ca. 35.000 und drei Stellen zur Dosierung des tert.-Amylperoxypivalats. Der Reaktionsverlauf wird durch die Maximaltemperaturen hinter den Stellen, an denen tert.-Amylperoxypivalat dosiert wird, charakterisiert. T11: 228/225/224 °C, T12: 219/226/225 °C.

### I.2 Herstellung von Vorstufen-Copolymeren (A.6 bis (A.10))

In einem Hochdruckautoklaven, wie er in der Literatur beschrieben ist (M. Buback et al., Chem. Ing. Tech. 1994, 66, 510), wurden Ethylen, die in Tabelle 1 angegebene Menge Vinylphosphonsäuredimethylester II.1 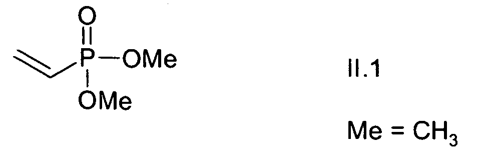 entweder in Substanz oder als Lösung in Toluol (Konzentration s. Tabelle 1) und Methacrylsäure (Tabelle 1) copolymerisiert. Dazu wurde Ethylen (10,0 kg/h) unter dem Reaktionsdruck von 1700 bar in den Hochdruckautoklaven kontinuierlich eingespeist. Vinylphosphonsäuredimethylester wurden mit Hilfe eines weiteren Kompressors unter dem Reaktionsdruck von 1700 bar in den Hochdruckautoklaven kontinuierlich eingespeist. Getrennt davon wurde die in Tabelle 1 angegebene Menge Methacrylsäure mit einem Kompressor zunächst auf einen Zwischendruck von 260 bar verdichtet und anschließend mit Hilfe eines weiteren Kompressors unter dem Reaktionsdruck von 1700 bar in den Hochdruckautoklaven kontinuierlich eingespeist. Getrennt davon wurde die in Tabelle 1 angegebene Menge Initiatorlösung, bestehend aus tert.-Amylperoxypivalat (in Isododekan, Konzentration siehe Tabelle 1), unter dem Reaktionsdruck von 1700 bar in den Hochdruckautoklaven kontinuierlich eingespeist. Getrennt davon wurde die in Tabelle 1 angegebene Menge Propionaldehyd (in Substanz oder als Lösung in Isododekan, Konzentration siehe Tabelle 1) mit einem Kompressor zunächst auf einen Zwischendruck von 260 bar verdichtet und anschließend mit Hilfe eines weiteren Kompressors unter dem Reaktionsdruck von 1700 bar in den Hochdruckautoklaven kontinuierlich eingespeist. Die Reaktionstemperatur betrug etwa 220°C. Man erhielt Vorstufen-Copolymer mit den aus Tabelle 2 ersichtlichen analytischen Daten.

**Tabelle 1 Herstellung von Vorstufen-Copolymer (A.1) -(A.12)**

| Nr. | T_{Reak}. txy [°C] | Ethylen [kg/h] | VPD [l/h] | VPD-Lsg. [l/h] | c(VPD) [Vol.-%] | MAS [l/h] | PO in ID [l/h] | c(PO) | PA [l/h] | PA in ID [l/h] | c(PA) [Vol.-%] | Umsatz Ethylen [Gew.-%] | Umsatz VPD [Gew.-%] | Austrag (VCP) [kg/h] |
|---|---|---|---|---|---|---|---|---|---|---|---|---|---|---|
| (A.1) | 219 | 10 | - | 0,77 | 50 | - | 2,02 | 0,02 | 0,41 | - | 100 | 18 | 66 | 2,1 |
| (A.2) | 217 | 10 | - | 0,77 | 50 | - | 1,83 | 0,02 | - | 0,54 | 20 | 18 | 75 | 2.1 |
| (A.3) | 221 | 10 | 0,79 | - | - | - | 1,26 | 0,02 | 0,53 | - | 100 | 20 | 68 | 2.6 |
| (A.4) | 217 | 10 | 0,79 | - | - | - | 1,07 | 0,02 | - | 0,55 | 20 | 19 | 67 | 2,5 |
| (A.5) | 219 | 12 | 0,85 | - | - | - | 1,29 | 0,02 | - | 0,29 | 11 | 13 | 50 | 2,1 |
| (A.6) | 221 | 10 | - | 0,58 | 33 | 0,95 | 1,48 | 0,09 | 0,69 | - | 100 | 17 | 55 | 2.5 |
| (A.7) | 220 | 10 | - | 0,56 | 33 | 0,85 | 1.35 | 0,08 | - | 0,93 | 33 | 19 | 64 | 2.8 |
| (A.8) | 224 | 10 | - | 0,75 | 33 | 0,75 | 1,23 | 0,06 | 0,38 | - | 100 | 18 | 49 | 2,6 |
| (A.9) | 220 | 10 | 0.53 | - | - | 0,55 | 1,14 | 0,05 | 0,37 | - | 100 | 17 | 62 | 2,6 |
| (A.10) | 220 | 10 | 0,81 | - | - | 0,40 | 1,29 | 0,04 | 0,40 | - | 100 | 16 | 60 | 2.5 |
| (A.11) | T11 | 3200 | 140 | - | - | - | 17 | 0,5 | 3,2 | - | 100 | 23 | 98 | 870 |
| (A.12) | T12 | 3200 | 230 | - | - | - | 16 | 0,5 | 2.9 | - | 100 | 21 | 97 | 900 |

| | | | | | | | | | | | | | | |
|---|---|---|---|---|---|---|---|---|---|---|---|---|---|---|
| Unter T_{Reaktor} ist die maximale Innentemperatur des Hochdruckautoklaven zu verstehen. Abkürzungen: VPD: Vinylphosphonsäuredimethylester, ID: Isododekan (2,2.4,6,6-Pentamethylheptan), PO: tert.-Amylperoxypivalat c(PO): Konzentration von PO in ID in mol/l, c(PA): Konzentration von PA in ID in Vol.-%, 100 Vol.-% entsprechen reinem PA, c(VPD): Konzentration von VPD in Toluol in Gew.-% VCP: Vorstufen-Copolymer, MAS: Methacrylsäure | | | | | | | | | | | | | | |

**Tabelle 2: Analytische Daten von Vorstufen-Copolymer (A.1) - (A.11)**

| Nr. | Gehalt Ethylen [Gew.-%] | Gehalt VPD [Gew.-%] | Gehalt MAS [Gew.-%] | Gehalt Ethylen [mol-%] | Gehalt VPD [mol-%] | Gehalt MAS [mol-%] | Säurezahl [mgKOH/g] | v/mm²/s | Tₘₑₗₜ [°C] | ρ[g/cm³] |
|---|---|---|---|---|---|---|---|---|---|---|
| (A.1) | 86.1 | 13,9 | - | 96,8 | 3,2 | - | - | 285 | 100,1 | 0,9438 |
| (A.2) | 84,2 | 15,8 | - | 96,3 | 3,7 | - | - | 5.300 | 99,6 | 0,9439 |
| (A.3) | 76,4 | 23,6 | - | 94,0 | 6,0 | - | - | 220 | 73,9 | 0,9614 |
| (A.4) | 75,6 | 24,4 | - | 93,8 | 6,2 | - | - | 5.000 | 89,0 | 0,9631 |
| (A.5) | 77,0 | 23,0 | - | 94,2 | 5,8 | - | - | 26.900 | n.b. | n.b. |
| (A.6) | 67,1 | 4,9 | 27,9 | 86,9 | 1,3 | 11,8 | 181,7 | 5.300 | 66,1 | n.b. |
| (A.7) | 68,6 | 4,9 | 26,5 | 87,7 | 1,3 | 11,0 | 172,4 | 19.800 | 70,4 | n.b. |
| (A.8) | 71,1 | 5,4 | 23,5 | 89,0 | 1,4 | 9,6 | 152,9 | 5.700 | 70,3 | n.b. |
| (A.9) | 67,3 | 14,4 | 18,3 | 88,3 | 3,9 | 7,8 | 119,4 | 5.100 | 70,7 | n.b. |
| (A.10) | 64,9 | 22,2 | 12,9 | 88,1 | 6,2 | 5,7 | 84,3 | 4.800 | 69,5 | n.b. |
| (A.11) | 84,2 | 15,8 | - | 96,3 | 3,7 | - | - | 5.300 | 99,5 | 0,9439 |
| (A.12) | 75,5 | 24,5 | - | 93,7 | 6.3 | - | - | 5.400 | 91,3 | 0,9636 |

| | | | | | | | | | | |
|---|---|---|---|---|---|---|---|---|---|---|
| Der Gehalt an MAS wurde durch Bestimmung der Säurezahl nach DIN 53402 bestimmt Der Gehalt an Ethylen und VPD wurde durch 1 H-NMR-SpekVoskopie bestimmt. Der Gehalt an Phosphor wurde für (A.6) und (A.10) zusätzlich durch eine Elementaranalyse bestimmt : (A.6): P = 1,1g/100 g Vorstufen-Copolymer; das entspricht 4,8 Gew.-% (1,3 mol-%) VPD, (A.10) : P = 4,9g/100 g Vorstufen-Copolymer; das entspricht 21,6 Gew.-% (6.0 mol-%) VPD. Die Dichte wurde bestimmt nach DIN 53479. Der Schmelzpunkt bzw. Schmelzbereich T_{melt wurde} durch DSC (Differential scanning calorimetry) nach DIN 51007 bestimmt. | | | | | | | | | | |

### II. Herstellung von erfindungsgemäßen Copolymeren

### II.1 Herstellung von erfindungsgemäßem Copolymer CP-4.1

In einem 2 Liter Rundkolben wurden 200 g des Vorstufen-Copolymers (A.4) mit 550 g Isopropanol unter Rückfluss erwärmt (Vorlage 1). 200 g der Vorlage 1 wurden zusammen mit 58,2 g NaOH (etwa 2 Äquivalente bezogen auf die Methoxygruppen von (A.4)) und 500 g Isopropanol unter Rückfluss gerührt. Nach einer Stunde wurden weitere 200 g und nach weiteren 2 h der Rest der Vorlage 1 hinzugefügt. Man beobachtete die Bildung eines festen polymeren Niederschlags. Nach 8 Stunden Kochen am Rückfluss ließ man auf Raumtemperatur abkühlen, dekantierte das Lösungsmittel vom festen polymeren Niederschlag ab und nahem diesen in einem 2-Liter-Rundkolben mit 1,4 Liter Wasser bei 95° bis 98°C auf. Man beobachtete die Bildung einer Emulsion. Man rührte 3 Stunden bei Zimmertemperatur. Man fällte durch Zugabe einer 10 Gew.-% Salzsäure (Einstellung eines pH-Werts von ca. 3). Das ausgefällte Material wurde mit Wasser gewaschen, abfiltriert und bei 130°C getrocknet. Man erhielt 175 g erfindungsgemäßes Copolymer CP-4.1, welches gemäß ¹H-NMR noch 16 % mol-% der ursprünglich vorhandenen Methoxygruppen enthielt.

### II.2 Herstellung von erfindungsgemäßem Copolymer CP-4.2

In einem zylindrischen 2-Liter-Druckgefäß aus Glas wurden 100 g des Vorstufen-Copolymers (A.4) mit 1 Liter Isopropanol und 29,1 g NaOH (etwa 2 Äquivalente bezogen auf die Methoxygruppen von (A.4)) binnen 2 h auf 126°C (3,5 bar) erwärmt, etwa 2 h bei 126°C (3,5 bar) mit ca. 1700 Umdrehungen pro Minute gerührt. Nach etwa einer weiteren Stunde war die Temperatur auf 114°C und der Druck auf 2,3 bar abgefallen. Der Gefäßinhalt wurde auf Zimmertemperatur abgekühlt, auf Normaldruck entspannt und der ausgefallene feste Niederschlag in 1000 ml Wasser unter Bildung einer Emulsion aufgenommen. Man fällte durch Zugabe einer 10 Gew.-% Salzsäure (Einstellung eines pH-Werts von ca. 3). Das ausgefällte Material wurde mit Wasser gewaschen, abfiltriert und bei 130°C getrocknet. Man erhielt 75 g erfindungsgemäßes Copolymer CP-4.2, welches gemäß ¹H-NMR noch 5 mol-% der ursprünglich vorhandenen Methoxygruppen enthielt.

### II.3 Herstellung von erfindungsgemäßem Copolymer CP-6

In einem 2 Liter Rundkolben wurden 147,2 g des Vorstufen-Copolymers (A.6) mit 25,7 g NaOH (als 10 Gew.-% wässrige Natronlauge zugegeben) und insgesamt 563 g Wasser binnen 30 min auf 95°C erwärmt. Der Kolbeninhalt wurde weitere 3,5 Stunden bei 95°C gerührt und dann auf Zimmertemperatur abgekühlt. Man beobachtete bereits nach einer Stunde Rühren die Bildung einer opaken Emulsion. Beim Abkühlen auf Raumtemperatur entstand eine milchige Emulsion.

Die so erhaltene milchige Emulsion wurde mit Wasser auf das doppelte Volumen verdünnt und mit 10 Gew.-% Salzsäure auf einen pH-Wert von 1,5 angesäuert, wobei ein weißer Feststoff zusammenklumpte und ausfiel. Der ausgefallene Feststoff wurde mechanisch zerkleinert, viermal mit Wasser gewaschen, abdekantiert und bei 130°C getrocknet. Es resultierten 130 g erfindungsgemäßes Copolymer CP-6. Die Aufnahme eines ¹H-NMR-Spektrums ergab, dass etwa 30 mol-% der Methoxygruppen des Vorstufen-Copolymers (A.6) hydrolysiert waren.

### II.4 Herstellung von erfindungsgemäßem Copolymer CP-7

Analog Beispiel II.3 wurden 211,2 g des Vorstufen-Copolymers (A.7) mit 36,9 g NaOH und insgesamt 805 ml Wasser hydrolysiert. Nach Fällung mit 10 Gew.-% Salzsäure und Aufarbeitung erhielt man 206 g erfindungsgemäßes Copolymer CP-7. Die Aufnahme eines ¹H-NMR-Spektrums ergab, dass etwa 38 mol-% der Methoxygruppen des Vorstufen-Copolymers (A.7) hydrolysiert waren.

### II.5 Herstellung von erfindungsgemäßem Copolymer CP-10.1

Analog Beispiel II.3 wurden 173,9 g des Vorstufen-Copolymers (A.10) mit 34,2 g Na-OH und 750 ml Wasser hydrolysiert. Nach erst nach 4,5 Stunden hatte sich eine Emulsion gebildet, die höher viskos war als die Emulsionen aus den Beispielen II.3 und II.4. Man verdünnte mit weiteren 200 ml Wasser und rührte eine weitere Stunde bei 95°C. Nach Fällung mit verdünnter HCl (analog zu Beispiel II.3) und Trocknung bei 130°C erhielt man 165 g erfindungsgemäßes Copolymer CP-10.1.

### II.6 Herstellung von erfindungsgemäßem Copolymer CP-6.3

200 g des Vorstufen-Copolymers (A.6) wurden mit 35,8 g 25 Gew.-% wässriger Ammoniaklösung und 764 ml Wasser bei 95°C unter Bildung einer Emulsion insgesamt 3,5 Stunden gerührt. Die so erhaltene Emulsion wurde von geringen Mengen Rückstand filtriert. Es resultierte eine ca. 20 Gew.-% Emulsion von erfindungsgemäßem Copolymer CP-6.3, bei der eine mit verdünnter Salzsäure ausgefällte und analog der vorhergehenden Beispiele aufgearbeitete ¹H-NMR Probe ergab, dass etwa 8 mol-% der Methoxygruppen des Vorstufen-Copolymers (A.6) hydrolysiert waren.

### II.7 Herstellung von erfindungsgemäßem Copolymer CP-7.2

200 g des Vorstufen-Copolymers (A.7) wurden mit 35,8 g 25 Gew.-% wässriger Ammoniaklösung und 764 ml Wasser bei 95°C unter Bildung einer Emulsion insgesamt 5 Stunden gerührt. Die so erhaltene Emulsion wurde von geringen Mengen Rückstand filtriert. Es resultierte eine ca. 20 Gew.-% Emulsion von erfindungsgemäßem Copolymer CP-7.2, bei der eine mit verdünnter Salzsäure ausgefällte und analog der vorhergehenden Beispiele aufgearbeitete ¹H-NMR Probe ergab, dass etwa 8 mol-% der Methoxygruppen des Vorstufen-Copolymers (A.7) hydrolysiert waren.

### II.8 Herstellung von erfindungsgemäßem Copolymer CP-10.2

200 g des Vorstufen-Copolymers (A.10) wurden in einem 2 Liter Rundkolben mit 40,5 g 25 Gew.-% wässriger Ammoniaklösung und 1093 ml Wasser bei 95°C unter Bildung einer Emulsion insgesamt 4 Stunden gerührt. Die so erhaltene Emulsion wurde von geringen Mengen Rückstand filtriert. Es resultierte eine ca. 15 Gew.-% Emulsion von erfindungsgemäßem Copolymer CP-10.2, bei der eine mit verdünnter Salzsäure ausgefällte und analog der vorhergehenden Beispiele aufgearbeitete ¹H-NMR Probe ergab, dass etwa 13 mol-% der Methoxygruppen des Vorstufen-Copolymers (A.10) hydrolysiert waren.

In einem weiteren Versuch zeigte sich, dass eine entsprechende 20 Gew.-% wässrige Emulsion von erfindungsgemäßem Copolymer CP-10.2 beim Abkühlen auf Raumtemperatur gelartig wurde.

### III. Behandlung von Oberflächen, allgemeine Versuchsbeschreibung

Für die Beispiele und Vergleichsbeispiele wurden Prüfbleche aus Al 99,9, CuZn 37, Zn 99,8, verzinktem Stahl (20µm einseitige Zinkauflage) oder Baustahl St 1.0037 eingesetzt.

Man setzte jeweils eine 5 Gew.-% wässrige Lösung des betreffenden erfindungsgemäβen Copolymers ein. Die wässrige Lösung des betreffenden erfindungsgemäßen Copolymers wurde homogenisiert und in ein Tauchbad gefüllt. Die vorgereinigten Prüfbleche wurden über die angegebene Zeit eingetaucht und danach bei 80°C bis zur Gewichtskonstanz getrocknet. Abschließend wurden die Ränder der beschichteten Bleche abgeklebt, um bei der Beurteilung Randeffekte auszuschließen.

Die Dicke der Passivierungsschicht wurde durch Differenzwägung vor und nach Einwirken der erfindungsgemäß eingesetzten Zusammensetzung auf die Metalloberfläche und unter der Annahme ermittelt, dass die Schicht eine Dichte von 1 kg/l aufweist. Im Folgenden wird unter "Schichtdicke" immer eine derartig ermittelte Größe verstanden, unabhängig davon, welche Dichte die Schicht tatsächlich aufwies.

Die korrosionsinhibierende Wirkung wurde mittels eines Salzsprühtests in einer Salzsprühnebelatmosphäre nach DIN 5002 ermittelt. Je nach Art der Korrosionsschäden wurde die Standzeit im Korrosionstest unterschiedlich definiert.

Bildeten sich weiße Flecken von im Allgemeinen mehr als 1 mm Durchmesser (Zn- oder Al-Oxid, sogenannter Weißrost), so wurde die Standzeit als die Zeit angegeben, nach der das Schadbild dem Bewertungsgrad 8 in DIN EN ISO 10289 vom April 2001, Anhang B, Seite 19, entspricht.

In den nachfolgenden Beispielen wurden gegebenenfalls folgende Blechvorbehandlungen zur Gewährleistung einer chromfreien Oberfläche gewählt.

### III.1 Vorbehandlung von Prüfblechen, allgemeine Vorschriften

Die Vorbehandlung der Prüfbleche erfolgte nach ISO 8407 materialspezifisch und ist hier für St 1.0037 explizit aufgeführt.

### III.1.1 Entfetten und Entölen bei saurem pH-Wert

Unpassivierte elektrolytisch verzinkte Prüfbleche mit den Abmessungen 50 mm · 20 mm · 1 mm wurden in eine wässrige Reinigungslösung von 0,5 Gew.-% HCl und 0,1 Gew.-% eines mit im Mittel 9 Äquivalenten Ethylenoxid ethoxylierten gesättigten C₁₃-Oxoalkohols getaucht, sofort mit vollentsalztem Wasser abgespült und anschließend durch Überblasen mit Stickstoff getrocknet.

### III.1.2 Entfetten bei alkalischem pH-Wert

Ansetzen eines alkalisches Entfettungsbades:
In einer Kunststoffwanne mit zwei flächigen Elektroden (Edelstahl oder Graphit), die eine größere Oberfläche als das jeweilige Prüfblech hatten, wurde eine Lösung eines Entfettungsbads folgender Zusammensetzung eingesetzt:
   20 g NaOH
   22 g Na₂CO₃
   16 g Na₃PO₄·12 H₂O
   1 g EDTA-Na₄
   0,5 g mit im Mittel 9 Äquivalenten Ethylenoxid ethoxylierter gesättigter C₁₃-Oxoalkohol [C₁₃(EO)₉]
   940 ml destilliertes Wasser.

Zur Herstellung des alkalischen Entfettungsbades löste man NaOH, Na₂CO₃ und Na₃PO₄ in destilliertem Wasser nacheinander unter Rühren. Parallel dazu löste man [C₁₃(EO)₉] und EDTA-Na₄ getrennt in destilliertem Wasser vor, wobei dies bei der ED-TA-Na₄-Lösung bei einer Temperatur von 50°C erfolgt. Die wässrigen Lösungen von [C₁₃(EO)₉] und EDTA-Na₄ wurden anschließend zu der NaOH-Na₂CO₃-Na₃PO₄-Lösung in einen Messzylinder gegeben, auf Zimmertemperatur abgekühlt und mit destilliertem Wasser auf 1000 ml aufgefüllt.

### Durchführung einer Entfettung bei alkalischem pH-Wert:

Ein Prüfblech mit den Abmessungen 50 mm · 20 mm · 1 mm wurde mit einem Papierlappen abgewischt und bei 10 Volt in das alkalische Entfettungsbad zwischen den Elektroden eingetaucht und als Kathode geschaltet. Die Spannung wurde so justiert, dass die Stromstärke 1 A betrug. Nach zehn Sekunden wurde das Prüfblech aus dem alkalischen Entfettungsbad herausgenommen und fünf Sekunden unter fließendem vollentsalztem Wasser gespült.

### III.2 Prüfvorschrift, allgemeines Vorgehen

Zunächst wurde jeweils eine Vorbehandlung des betreffenden Prüfblechs nach (Cu-Prüfbleche) oder III.1.2 (Stahl-Prüfbleche) durchgeführt.

Im Anschluss wurde das Prüfblech jeweils in eine Prüflösung für 1 bis 30 Sekunden bei Raumtemperatur eingetaucht, danach bei 80°C bis zur Gewichtskonstanz getrocknet und der flächenbezogene Massenaufbau mittels Differenzwägung gravimetrisch bestimmt. Der angegebene Wert ergab sich aus dem Mittelwert aus einzelnen Messungen je 3 verschiedenen Prüfblechen. Die Vorbereitung bzw. Reinigung der Prüfbleche erfolgte nach ISO 8407 materialspezifisch und ist hier für St 1.0037 explizit aufgeführt.

### III.2.1 Beschichtung aus (CP-7) auf St 1.0037

Einmaliges Tauchen für 10 Sekunden bei Zimmertemperatur in eine 5 Gew.-% wässrige Lösung von (CP-7)
Schichtdicke: 3 µm.
Das beschichtete Prüfblech zeigte keine Veränderungen hinsichtlich der Farbe und des metallischen Glanzes im Vergleich mit dem unbehandelten Prüfblech.
Verweilzeit bis zur Beurteilung 8 in einer 5 %igen Salzsprühnebelatmosphäre bei 30°C: 10 Stunden.

### III.2.2Beschichtung aus (CP-4.2) auf St 1.0037

Man tauchte Prüfbleche einmalig für 10 Sekunden in eine 5 Gew.-% ethanolische Lösung von (CP-4.2).
Schichtdicke: 4 µm.
Das beschichtete Prüfblech zeigte keine Veränderungen hinsichtlich der Farbe und des metallischen Glanzes im Vergleich mit dem unbehandelten Prüfblech.
Verweilzeit bis zur Beurteilung 8 in einer 5 %igen Salzsprühnebelatmosphäre bei 30°C: 15 Stunden.

### III.2.3Beschichtung aus (CP-6.3) auf St 1.0037

Man tauchte Prüfbleche einmalig für 10 Sekunden in eine 5 Gew.-% wässrige Lösung von (CP-6.3).
Schichtdicke: 2,9 µm.
Das beschichtete Prüfblech zeigte keine Veränderungen hinsichtlich der Farbe und des metallischen Glanzes im Vergleich mit dem unbehandelten Prüfblech.
Verweilzeit bis zur Beurteilung 8 in einer 5%igen Salzsprühnebelatmosphäre bei 30°C: 10 Stunden.

### Vergleichsbeispiel V1

"Nullblech" ohne Beschichtung
Verweilzeit bis zur Beurteilung 8 in einer 5%igen Salzsprühnebelatmosphäre bei 30°C ist weniger als 1 Stunde.

### Vergleichsbeispiel V2: Passivierungsschicht mit H₃PO₄ (Phosphatierung)

Man tauchte Prüfbleche einmalig für 10 Sekunden in eine wässrige 0,1 bzw. 0,5 oder 1 Gew.-% Phosphorsäure.
Verweilzeit bis zur Beurteilung 8 in einer 5%igen Salzsprühnebelatmosphäre bei 30°C: jeweils weniger als 2 Stunden.

## Patentansprüche

1. Copolymere, die als Comonomere einpolymerisiert enthalten
(a) Ethylen,
(b) eine oder mehrere Verbindungen der allgemeinen Formel I 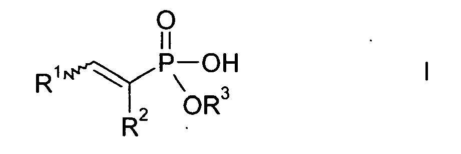
(c) gegebenenfalls einen oder mehrere Alkenylphosphonsäurediester,
(d) gegebenenfalls ein oder mehrere weitere radikalisch copolymerisierbare Comonomere,
wobei die Variablen wie folgt definiert sind:
R¹ gewählt aus Wasserstoff und unverzweigtem und verzweigtem C₁-C₁₀-Alkyl, R² gewählt aus Wasserstoff und unverzweigtem und verzweigtem C₁-C₁₀-Alkyl R³ gewählt aus Wasserstoff, Phenyl, Benzyl und unverzweigtem und verzweigtem C₁-C₁₀-Alkyl und unverzweigtem und verzweigten Hydroxy-C₂-C₁₀-Alkyl,
als freie Säure oder partiell oder vollständig neutralisiert mit Alkalimetall, Erdalkalimetall, Ammoniak oder organischem Amin.

2. Copolymere nach Anspruch 1, **dadurch gekennzeichnet, dass** sie ein mittleres Molekulargewicht M_{w} im Bereich von 1.000 bis 500.000 g/mol haben.

3. Copolymere nach einem der Ansprüche 1 oder 2, **dadurch gekennzeichnet, dass** es sich bei Alkenylphosphonsäurediester (c) um eine Verbindung der allgemeinen Formel II handelt, 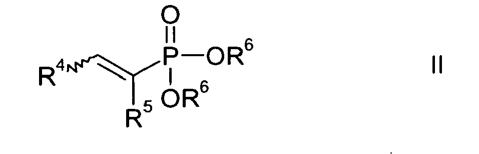 wobei die Variablen wie folgt definiert sind:
R⁴ gewählt aus Wasserstoff und unverzweigtem und verzweigtem C₁-C₁₀-Alkyl, R⁵ gewählt aus Wasserstoff und unverzweigtem und verzweigtem C₁-C₁₀-Alkyl
R⁶ gleich oder verschieden und gewählt aus Phenyl, Benzyl und unverzweigtem und verzweigtem C₁-C₁₀-Alkyl, wobei die Reste R⁶ miteinander unter Bildung eines fünf- bis 10-gliedrigen Rings verbunden sein können.

4. Copolymere nach einem der Ansprüche 1 bis 3, **dadurch gekennzeichnet, dass** R¹ und R⁴, R² und R⁵ jeweils paarweise gleich sind.

5. Copolymere nach einem der Ansprüche 1 bis 4, **dadurch gekennzeichnet, dass** R¹ und R² jeweils Wasserstoff bedeuten und R³ und R⁶ jeweils gleich sind und gewählt aus C₁-C₄-Alkyl.

6. Copolymere nach einem der Ansprüche 1 bis 5, **dadurch gekennzeichnet, dass** weitere radikalische copolymerisierbare Comonomere (d) gewählt werden aus (Meth)acrylsäure, (Meth)acrylsäure-C₁-C₁₀-Alkylester, Ameisensäurevinylester, C₁-C₁₀-Alkylcarbonsäurevinylester, ethylenisch ungesättigten C₄-C₁₀-Dicarbonsäuren und deren Anhydriden, C₁-C₂₀-Alkylvinyl- und allylethern und α-Olefinen mit 3 bis 40 C-Atomen.

7. Verfahren zur Herstellung von Copolymeren nach einem der Ansprüche 1 bis 6, **dadurch gekennzeichnet, dass** man
(a) Ethylen,
(c) gegebenenfalls einen oder mehrere Alkenylphosphonsäurediester,
(d) gegebenenfalls ein oder mehrere weitere radikalisch copolymerisierbare Comonomere,
bei 500 bis 4000 bar und Reaktionstemperaturen im Bereich von 150 bis 300°C miteinander copolymerisiert und anschließend zumindest partiell hydrolysiert.

8. Verwendung von Copolymeren nach einem der Ansprüche 1 bis 6 zur Behandlung von Oberflächen.

9. Verfahren zur Behandlung von Oberflächen unter Verwendung von Copolymeren nach einem der Ansprüche 1 bis 6.

10. Verfahren nach Anspruch 9, **dadurch gekennzeichnet, dass** man eine Metall- oder Polymeroberfläche, die nicht vorbehandelt oder vorbehandelt sein kann, mit einer Schicht von Copolymer nach einem der Ansprüche 1 bis 5 versieht.

11. Verfahren nach einem der Ansprüche 9 oder 10, **dadurch gekennzeichnet, dass** man eine Metall- oder Polymeroberfläche mit einer Lösung von Copolymer nach einem der Ansprüche 1 bis 6 benetzt.

12. Verfahren nach einem der Ansprüche 9 bis 11, **dadurch gekennzeichnet, dass** man die Metall- oder Polymeroberfläche nach einem kontinuierlichen Bandverfahren behandelt.

13. Verfahren nach einem der Ansprüche 9 bis 12, **dadurch gekennzeichnet, dass** man eine Metall- oder Polymeroberfläche, die nicht vorbehandelt oder vorbehandelt sein kann, mit einer Schicht von Copolymer nach einem der Ansprüche 1 bis 5 und danach mit einem weiteren Beschichtungsmittel versieht.

14. Polymer- oder Metalloberfläche, beschichtet mit mindestens einem Copolymer nach einem der Ansprüche 1 bis 6.

15. Gegenstand mit mindestens einer Oberfläche nach Anspruch 14.

16. Wässrige Formulierung, enthaltend 0,01 bis 40 Gew.-% Copolymer nach einem der Ansprüche 1 bis 6.

17. Wässrige Formulierung nach Anspruch 16, enthaltend mindestens einen Zusatzstoff, gewählt aus Dispergiermitteln, Tensiden, Korrosionsinhibitoren, Antioxidatien, Bioziden, Wachsen, Komplexbildnern, Metallsalzen, Säuren und Basen.

## Claims

1. A copolymer comprising as comonomers in copolymerized form:
(a) ethylene,
(b) one or more compounds of the general formula I 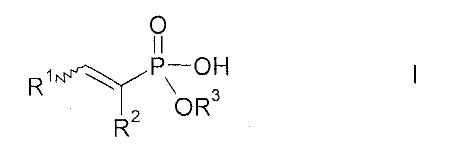
(c) if desired, one or more alkenylphosphonic diesters,
(d) if desired, one or more other free-radically copolymerizable comonomers,
whose variables are defined as follows:
R¹ is selected from hydrogen and unbranched and branched C₁-C₁₀-alkyl,
R² is selected from hydrogen and unbranched and branched C₁-C₁₀-alkyl,
R³ is selected from hydrogen, phenyl, benzyl, and unbranched and branched C₁-C₁₀-alkyl and unbranched and branched hydroxy-C₂-C₁₀-alkyl,
as free acid or partially or completely neutralized with alkali metal, alkaline earth metal, ammonia or organic amine.

2. The copolymer according to claim 1, which has an average molecular weight M_{w} in the range from 1000 to 500 000 g/mol.

3. The copolymer according to either of claims 1 and 2, wherein alkenylphosphonic diester (c) is a compound of the general formula II 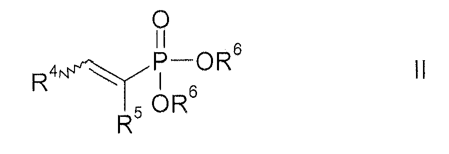 whose variables are defined as follows:
R⁴ is selected from hydrogen and unbranched and branched C₁-C₁₀-alkyl,
R⁵ is selected from hydrogen and unbranched and branched C₁-C₁₀-alkyl,
R⁶ is identical or different at each occurrence and is selected from phenyl, benzyl, and unbranched and branched C₁-C₁₀-alkyl, it being possible for the radicals R⁶ to be joined to one another to form a five- to 10-membered ring.

4. The copolymer according to any one of claims 1 to 3, wherein R¹ and R⁴, R² and R⁵, in each case in pairs, are identical.

5. The copolymer according to any one of claims 1 to 4, wherein R¹ and R² are each hydrogen and R³ and R⁶ are each identical and selected from C₁-C₄-alkyl.

6. The copolymer according to any of claims 1 to 5, wherein other free-radically copolymerizable comonomers (d) are selected from (meth)acrylic acid, (meth) acrylic acid C₁-C₁₀-alkyl esters, vinyl formate, C₁-C₁₀-alkylcarboxylic acid vinyl esters, ethylenically unsaturated C₄-C₁₀-dicarboxylic acids and their anhydrides, C₁-C₂₀-alkyl vinyl ethers, C₁-C₂₀-alkyl allyl ethers, and α-olefins having 3 to 40 carbon atoms.

7. A process for preparing a copolymer according to any one of claims 1 to 6, which comprises subjecting
(a) ethylene,
(c) if desired, one or more alkenylphosphonic diesters,
(d) if desired, one or more other free-radically copolymerizable comonomers
to copolymerization with one another at 500 to 4000 bar and reaction temperatures in the range from 150 to 300°C and subsequently to at least partial hydrolysis.

8. The use of a copolymer according to any one of claims 1 to 6 for treating surfaces.

9. A method of treating surfaces using copolymers according to any one of claims 1 to 6.

10. The method according to claim 9, wherein a metal surface or polymer surface, which may be unpretreated or pretreated, is provided with a layer of copolymer according to any one of claims 1 to 5.

11. The method according to either of claims 9 and 10, wherein a metal surface or polymer surface is wetted with a solution of copolymer according to any one of claims 1 to 6.

12. The method according to any one of claims 9 to 11, wherein the metal surface or polymer surface is treated by a continuous coil process.

13. The method according to any one of claims 9 to 12, wherein a metal surface or polymer surface, which may be unpretreated or pretreated, is provided with a layer of copolymer according to any of claims 1 to 5 and thereafter with a further coating material.

14. A polymer surface or metal surface coated with at least one copolymer according to any one of claims 1 to 6.

15. An article having at least one surface according to claim 14.

16. An aqueous formulation comprising 0.01% to 40% by weight of copolymer according to any one of claims 1 to 6.

17. The aqueous formulation according to claim 16, comprising at least one adjuvant selected from dispersants, surfactants, corrosion inhibitors, antioxidants, biocides, waxes, complexing agents, metal salts, acids, and bases.

## Revendications

1. Copolymères, qui contiennent en tant que comonomères intégrés par polymérisation
(a) de l'éthylène,
(b) un ou plusieurs composés de formule générale I 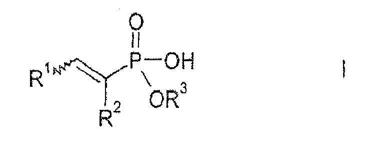
(c) éventuellement un ou plusieurs diesters d'acides alcénylphosphoniques,
(d) éventuellement un ou plusieurs autres comonomères copolymérisables par voie radicalaire,
les variables étant définies comme suit :
R¹ est choisi parmi un atome d'hydrogène et un groupe alkyle en C₁-C₁₀ ramifié ou non ramifié,
R² est choisi parmi un atome d'hydrogène et un groupe alkyle en C₁-C₁₀ ramifié ou non ramifié,
R³ est choisi parmi un atome d'hydrogène, le groupe phényle, le groupe benzyle et un groupe alkyle en C₁-C₁₀ ramifié ou non ramifié et un groupe hydroxyalkyle en C₂-C₁₀ ramifié ou non ramifié,
sous forme d'acide libre ou partiellement ou totalement neutralisé par un métal alcalin, un métal alcalino-terreux, l'ammoniac ou une amine organique.

2. Copolymères selon la revendication 1, **caractérisés en ce qu'**ils ont une masse moléculaire moyenne M_{w} dans la plage de 1 000 à 500 000 g/mole.

3. Copolymères selon la revendication 1 ou 2,
**caractérisés en ce que** les diesters d'acides alcénylphosphoniques (c) consistent en des composés de formule générale II 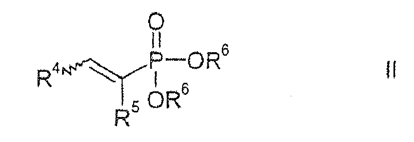 les variables étant définies comme suit :
R⁴ est choisi parmi un atome d'hydrogène et un groupe alkyle en C₁-C₁₀ ramifié ou non ramifié,
R⁵ est choisi parmi un atome d'hydrogène et un groupe alkyle en C₁-C₁₀ ramifié ou non ramifié,
R⁶ sont identiques ou différents et choisis parmi le groupe phényle, le groupe benzyle et un groupe alkyle en C₁-C₁₀ ramifié ou non ramifié, les radicaux R⁶ pouvant être liés l'un à l'autre avec formation d'un cycle à 5-10 chaînons.

4. Copolymères selon l'une quelconque des revendications 1 à 3, **caractérisés en ce que** R¹ et R⁴, R² et R⁵ sont chaque fois identiques par paires.

5. Copolymères selon l'une quelconque des revendications 1 à 4, **caractérisés en ce que** R¹ et R² représentent chacun un atome d'hydrogène et R³ et R⁶ sont chaque fois identiques et choisis parmi des groupes alkyle en C₁-C₄.

6. Copolymères selon l'une quelconque des revendications 1 à 5, **caractérisés en ce que** les autres comonomères (d) copolymérisables par voie radicalaire sont choisis parmi l'acide (méth)acrylique, des (méth) acrylates d'alkyle en C₁-C₁₀, des esters vinyliques d'acide formique, des esters vinyliques d'acides alkyl(C₁-C₁₀)carboxyliques, des acides dicarboxyliques en C₄-C₁₀ à insaturation éthylénique et leurs anhydrides, des éthers allyliques et alkyl(C₁-C₂₀)vinyliques et des α-oléfines ayant de 3 à 40 atomes de carbone.

7. Procédé pour la préparation de copolymères selon l'une quelconque des revendications 1 à 6, **caractérisé en ce que** qu'on copolymérise entre eux
(a) de l'éthylène,
(c) éventuellement un ou plusieurs diesters d'acides alcénylphosphoniques,
(d) éventuellement un ou plusieurs autres comonomères copolymérisables par voie radicalaire,
sous 500 à 4 000 bars et à des températures de réaction dans la plage de 150 à 300 °C et on effectue ensuite une hydrolyse au moins partielle.

8. Utilisation des copolymères selon l'une quelconque des revendications 1 à 6, pour le traitement de surfaces.

9. Procédé pour le traitement de surfaces avec utilisation de copolymères selon l'une quelconque des revendications 1 à 6.

10. Procédé selon la revendication 9, **caractérisé en ce qu'**on munit une surface de métal ou de polymère, qui peut être prétraitée ou non prétraitée, d'une couche de copolymère selon l'une quelconque des revendications 1 à 5.

11. Procédé selon la revendication 9 ou 10,
**caractérisé en ce qu'**on humecte une surface de métal ou de polymère avec une solution de copolymère selon l'une quelconque des revendications 1 à 6.

12. Procédé selon l'une quelconque des revendications 9 à 11, **caractérisé en ce qu'**on traite la surface de métal ou de polymère selon un procédé sur bande continue.

13. Procédé selon l'une quelconque des revendications 9 à 12, **caractérisé en ce qu'**on munit une surface de métal ou de polymère, qui peut être prétraitée ou non prétraitée, d'une couche de copolymère selon l'une quelconque des revendications 1 à 5 et ensuite d'un autre agent de revêtement.

14. Surface de métal ou de polymère, revêtue avec au moins un copolymère selon l'une quelconque des revendications 1 à 6.

15. Article présentant au moins une surface selon la revendication 14.

16. Composition aqueuse, contenant de 0,01 à 40 % en poids de copolymère selon l'une quelconque des revendications 1 à 6.

17. Composition aqueuse selon la revendication 16, contenant au moins un additif, choisi parmi les dispersants, les tensioactifs, les agents anticorrosion, les antioxydants, les biocides, les cires, les complexants, les sels métalliques, les acides et les bases.
